# EUROPEAN PATENT APPLICATION

(11) **EP 2 269 817 A1**
(43) Date of publication of application: **05.01.2011**
(21) Application number: 09726264.6
(22) Date of filing: 25.03.2009
(51) Int. Cl.: B32B 27/00, C08F 30/00, C08L 101/10, F28F 13/18

(54) **HYDROPHILIC MEMBER, FIN MEMBER, ALUMINUM FIN MEMBER, HEAT EXCHANGER AND AIR CONDITIONER**

(30) Priority: 25.03.2008 JP 2008079318; 12.09.2008 JP 2008235452
(71) Applicant: FUJIFILM Corporation, Tokyo 106-0031 (JP)
(72) Inventor: YAMASAKI, Sumiaki, Kanagawa (JP); TANAKA, Satoshi, Kanagawa (JP); MURAYAMA, Yuichiro, Kanagawa (JP); KONDO, Yoshiaki, Kanagawa (JP)
(74) Representative: HOFFMANN EITLE
(86) International application number: PCT/JP2009/056005
(87) International publication number: WO 2009/119689

(57) **Abstract**

A hydrophilic member endowed with sufficient hydrophilicity and excellent in the water resistance, antifouling property and scratch resistance can be provided, which is a hydrophilic member comprising a base material having provided thereon a hydrophilic film formed from a hydrophilic composition containing (A-1) a hydrophilic polymer having at least one hydrolyzable alkoxysilyl group on the polymer side chain and (B) a metal complex catalyst, wherein the water swelling degree of the hydrophilic film is 1.5 times or less.

## Description

### TECHNICAL FIELD

The present invention relates to a hydrophilic member comprising a base material having coated thereon a hydrophilic film, a fin stock, an aluminum-made fin stock, a heat exchanger using the aluminum-made fin stock, and an air conditioner.

### BACKGROUND ART

Various techniques for preventing adhesion of an oily stain to a member surface have been proposed. In particular, an optical member such as antireflection film, optical filter, optical lens, spectacle lens and mirror is preferably subjected to an effective antifouling treatment, because use by a human causes attachment of a stain such as fingerprint, sebum, sweat and cosmetic to impair the function and at the same time, removal of the stain is cumbersome. For example, taking note of the properties of a sol-gel organic-inorganic hybrid film, it has been found that a hydrophilic surface having a crosslinked structure obtained by hydrolyzing and condensation-polymerizing a hydrophilic polymer and an alkoxide exhibits excellent antifogging and antifouling performances and has excellent abrasion resistance (Patent Document 1).

In a heat exchanger used for air conditioners and the like, cohesive water produced during cooling grows into a waterdrop and stays between fins to form a water bridge, as a result, the cooling capacity is reduced. Similarly, attachment of a dust or the like between fins also impairs the cooling capacity.
In order to solve these problems, it is known to treat the fin stock surface of a heat exchanger with a hydrophilic composition (Patent Documents 2 to 4).
Also, for example, Patent Document 5 is known as a heat exchanger treated with a hydrophilic composition.

Patent Document 1: JP-A-2002-361800 (the term "JP-A" as used herein means an "unexamined published Japanese patent application")
Patent Document 2: JP-A-2003-201577
Patent Document 3: JP-A-2005-232269
Patent Document 4: JP-A-2005-75841
Patent Document 5: JP-A-2007-225174

### DISCLOSURE OF THE INVENTION

### PROBLEMS THAT THE INVENTION IS TO SOLVE

However, there is a problem that a hydrophilic film having a crosslinked structure (particularly, an organic crosslinked hydrophilic film) readily swells and because of low denseness of the film, a contaminant deleterious to the hydrophilic film is liable to intrude into the film, as a result, hydrophilicity is deteriorated. An object of the present invention is to solve these conventional problems and provide a hydrophilic member and a fin stock, particularly an aluminum-made fin stock for heat exchangers, each having a hydrophilic film endowed with sufficient hydrophilicity and excellent in the water resistance, antifouling property and scratch resistance.

### MEANS FOR SOLVING THE PROBLEMS

The above-described object can be attained by the invention having the following configurations.
1. A hydrophilic member comprising a base material having thereon a hydrophilic film formed from a hydrophilic composition containing (A-1) a hydrophilic polymer having at least one hydrolyzable alkoxysilyl group on the polymer side chain and (B) a metal complex catalyst, wherein the water swelling degree of the hydrophilic film is 1.5 times or less.
2. The hydrophilic member as described in 1 above, wherein the difference between the refractive index of the hydrophilic film in water and the refractive index of water is 0.14 or more.
3. The hydrophilic member as described in 1 or 2 above, wherein the difference between the refractive index of the hydrophilic film in water and the refractive index of water is from 0.17 to 0.20.
4. The hydrophilic member as described in any one of 1 to 3 above, wherein the hydrophilic composition further contains (A-2) a hydrophilic polymer having at least one hydrolyzable alkoxysilyl group at the polymer terminal.
5. The hydrophilic member as described in 4 above, wherein the mass ratio between the (A-2) hydrophilic polymer containing a hydrolyzable alkoxysilyl group at the polymer terminal and the (A-1) hydrophilic polymer containing a hydrolyzable alkoxysilyl group on the polymer side chain in the hydrophilic composition {(A-2) hydrophilic polymer containing a hydrolyzable alkoxysilyl group at the polymer terminal/(A-1) hydrophilic polymer containing a hydrolyzable alkoxysilyl group on the polymer side chain} is from 50/50 to 5/95.
6. The hydrophilic member as described in any one of 1 to 5 above, wherein the (A-1) hydrophilic polymer having at least one hydrolyzable alkoxysilyl group on the polymer side chain contains a structure represented by the following formula (1) :

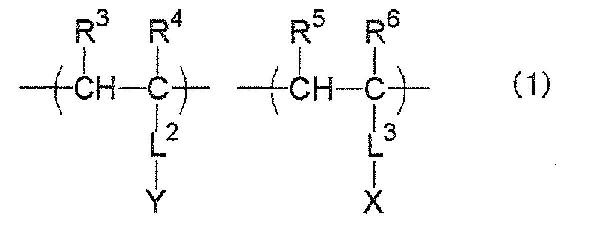

wherein each of R³, R⁴, R⁵ and R⁶ independently represents a hydrogen atom or a hydrocarbon group, X represents a hydrolyzable alkoxysilyl group, each of L² and L³ independently represents a single bond or a linking group, and Y represents -NHCOR⁷, -CONH₂, -N(R⁷)₂, -CON(R⁷)₂, -COR⁷, -OM, - CO₂M, -SO₃M, -PO₃M, -OPO₃M or -N(R⁷)₃Z¹, wherein R⁷ represents an alkyl group, an aryl group or an aralkyl group, M represents a hydrogen atom, an alkali metal, an alkaline earth metal or an onium, and Z¹ represents a halogen ion.
7. The hydrophilic member as described in any one of 4 to 6 above, wherein the (A-2) hydrophilic polymer having at least one hydrolyzable alkoxysilyl group at the polymer terminal contains a structure represented by the following formula (2):

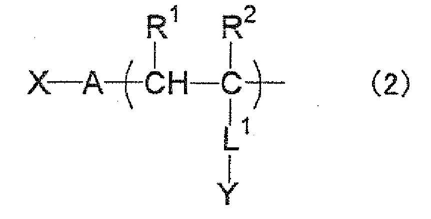

wherein each of R¹ and R² independently represents a hydrogen atom or a hydrocarbon group, X represents a hydrolyzable alkoxysilyl group, each of A and T independently represents a single bond or a linking group, and Y represents -NHCOR⁷, - CONH₂, -N(R⁷)₂, -CON (R⁷)₂, -COR⁷, -OM, -CO₂M, -SO₃M, -PO₃M, - OPO₃M or -N(R⁷)₃Z¹, wherein R⁷ represents an alkyl group, an aryl group or an aralkyl group, M represents a hydrogen atom, an alkali metal, an alkaline earth metal or an onium, and Z¹ represents a halogen ion.
8. The hydrophilic member as described in any one of 1 to 7 above, wherein the hydrophilic film is formed by applying the hydrophilic composition onto a base material and subjecting the applied hydrophilic composition to a heat treatment at a temperature of 50 to 180°C for 1 hour or more.
9. A fin stock having the hydrophilic member described in any one of 1 to 8 above.
10. An aluminum-made fin stock, wherein the fin stock described in 9 above is made of aluminum.
11. A heat exchanger having the aluminum-made fin stock described in 10 above.
12. An air conditioner having the heat exchanger described in 11 above.

### ADVANTAGE OF THE INVENTION

By using the hydrophilic composition of the present invention, a hydrophilic member endowed with sufficient hydrophilicity and excellent in the water resistance, antifouling property and scratch resistance, particularly an aluminum-made fin stock for a heat exchanger used in an air conditioner, can be provided.

### BEST MODE FOR CARRYING OUT THE INVENTION

The hydrophilic member of the present invention is a hydrophilic member comprising a base material having thereon a hydrophilic film formed from a hydrophilic composition containing (A-1) a hydrophilic polymer having at least one hydrolyzable alkoxysilyl group on the polymer side chain and (B) a metal complex catalyst, wherein the water swelling degree of the hydrophilic film is 1.5 times or less.
The present invention is described in detail below.

### [Hydrophilic Polymer]

The hydrophilic polymer for use in the present invention is (A-1) a hydrophilic polymer having at least one hydrolyzable alkoxysilyl group on the polymer side chain (sometimes referred to as (A-1) a specific hydrophilic polymer), preferably a polymer having a structure represented by the following formula (1). One kind of the hydrophilic polymer for use in the present invention may be used, or two or more kinds thereof may be used. Also, the hydrophilic polymer may contain one kind of the structure represented by the following formula (1) or two or more kinds thereof.

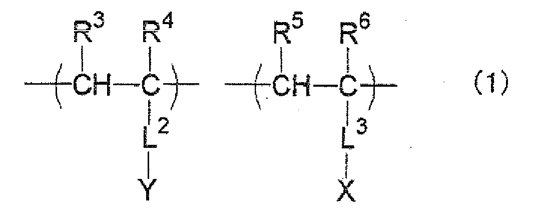

In formula (1), each of R³, R⁴, R⁵ and R⁶ independently represents a hydrogen atom or a hydrocarbon group, X represents a hydrolyzable alkoxysilyl group, each of L² and L³ independently represents a single bond or a linking group, and Y represents -NHCOR⁷, -CONH₂, -N(R⁷)₂, -CON(R⁷)₂, -COR⁷, -OM, - CO₂M, -SO₃M, -PO₃M, -OPO₃M or -N(R⁷)₃Z¹, wherein R⁷ represents an alkyl group, an aryl group or an aralkyl group, M represents a hydrogen atom, an alkali metal, an alkaline earth metal or an onium, and Z¹ represents a halogen ion.

X represents a hydrolyzable alkoxysilyl group and is preferably a group represented by the following formula (a): Formula (a):

-Si(R¹⁰²)ₐ(OR¹⁰¹)₃₋ₐ

In formula (a), R¹⁰¹ represents a hydrogen atom or an alkyl group, R¹⁰² represents a hydrogen atom or a monovalent hydrocarbon group selected from an alkyl group, an aryl group and an aralkyl group, a represents an integer of 0 to 2, provided that at least one R¹⁰¹ represents an alkyl group, and when a plurality of R¹⁰¹ or R¹⁰² are present, each R¹⁰¹ or R¹⁰² may be the same as or different from every other R¹⁰¹ or R¹⁰².

In the case where R¹⁰¹ represents an alkyl group, the alkyl group is preferably an alkyl group having a carbon number of 1 to 10, and specific preferred examples thereof include a methyl group (OR¹⁰¹ is a methoxy group) and an ethyl group (OR¹⁰¹ is an ethoxy group).
In the case where R¹⁰² represents an alkyl group, the alkyl group is preferably an alkyl group having a carbon number of 1 to 10, and specific preferred examples thereof include a methyl group, an ethyl group, and a hexyl group; in the case of representing an aryl group, the aryl group is preferably an aryl group having a carbon number of 6 to 25, and specific preferred examples thereof include a phenyl group; and in the case of representing an aralkyl group, the aralkyl group is preferably an aralkyl group having a carbon number of 7 to 12, and specific preferred examples thereof include a styryl group.

A linking group preferably intervenes between the repeating unit and the hydrolyzable alkoxysilyl group of the hydrophilic polymer or between the repeating unit and the main chain of the hydrophilic polymer. Each of the linking groups L² and L³ is independently, preferably selected from a single bond, -O-, -S-, -CO-, -NH-, -N<, an aliphatic group, an aromatic group, a heterocyclic group and a combination thereof. The linking group is preferably -O-, -S-, -CO-, -NH-, or a combination containing -O-, -S-, -CO- or -NH-.

In formula (1), each of R³, R⁴, R⁵ and R⁶ independently represents a hydrogen atom or a hydrocarbon group. The hydrocarbon group is preferably a hydrocarbon group having a carbon number of 1 to 8, and examples thereof include an alkyl group having a carbon number of 1 to 8, and an aryl group. A linear, branched or cyclic alkyl group is preferred, and specific examples thereof include a methyl group, an ethyl group, a propyl group, a butyl group, a pentyl group, a hexyl group, a heptyl group, an octyl group, an isopropyl group, an isobutyl group, an s-butyl group, a tert-butyl group, an isopentyl group, a neopentyl group, a 1-methylbutyl group, an isohexyl group, a 2-ethylhexyl group, a 2-methylhexyl group and a cyclopentyl group. In view of the effect and easy availability, each of R³, R⁴, R⁵ and R⁶ is preferably a hydrogen atom, a methyl group or an ethyl group.

These hydrocarbon groups may further have a substituent. When the alkyl group has a substituent, the substituted alkyl group is constructed by bonding a substituent to an alkylene group, and the substituent used here is a monovalent nonmetallic atom group excluding hydrogen. Preferred examples thereof include a halogen atom (-F, -Br, -Cl, -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-akylcarbamoyl group, an N,N-dialkylcarbamoyl group, an N-arylcarbamoyl group, an N-alkyl-N-arylcarbamoyl group, a sulfo group, a sulfonato group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonato group, a dialkylphosphono group, a diarylphosphono group, a monoalkylphosphono group, an alkylphosphonato group, a monoarylphosphono group, an arylphosphonato group, a phosphonoxy group, a phosphonatoxy group, an aryl group, and an alkenyl group.

The alkylene group in the substituted alkyl group is preferably a divalent organic residue formed by removing any one hydrogen atom on an alkyl group having a carbon number of 1 to 20, more preferably a linear alkylene group having a carbon number of 1 to 12, a branched alkylene group having a carbon number of 3 to 12, or a cyclic alkylene group having a carbon number of 5 to 10, still more preferably a linear alkylene group having a carbon number of 1 to 8, a branched alkylene group having a carbon number of 3 to 8, or a cyclic alkylene group having a carbon number of 5 to 8. Specific preferred examples of the substituted alkyl group obtained by combining the substituent with the alkylene group include a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxyethyl group, a 2-oxypropyl group, a carboxypropyl group, a methoxycarbonylethyl group, an allyloxycarbonylbutyl group,

a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-l-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group, and a 3-butynyl group.

Each of L² and L³ represents a single bond or a linking group. Here, when each of L² and L³ represents an organic linking group, each of L² and L³ preferably represents a divalent linking group composed of nonmetallic atoms and is preferably composed of 0 to 60 carbon atoms, from 0 to 10 nitrogen atoms, from 0 to 50 oxygen atoms, from 0 to 100 hydrogen atoms and from 0 to 20 sulfur atoms, and more preferably selected from -O-, -S-, -CO-, -NH-, -N<, an aliphatic group, an aromatic group, a heterocyclic group, and a combination thereof. The linking group is more preferably - O-, -s-, -CO-, -NH-, or a combination containing -O- -S-, - CO-, or -NH-. Specific examples of the linking group include linking groups illustrated below and linking groups composed of a combination thereof.

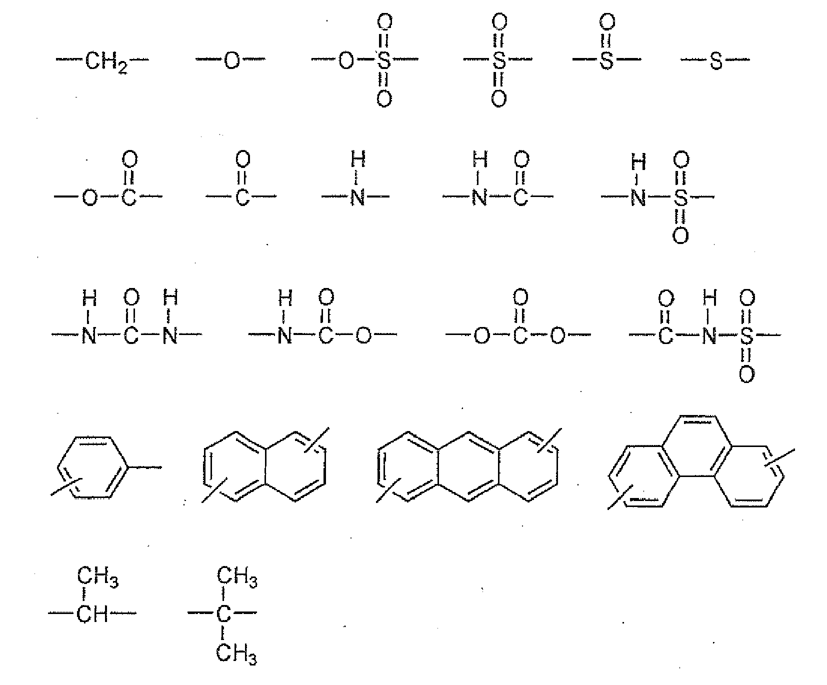

Each of L² and L³ is more preferably -CH₂CH₂CH₂S-, -CH₂S-, -CONHCH(CH₃)CH₂-, -CONH-, -CO-, -CO₂-, or -CH₂-.

Y represents -NHCOR⁷, -CONH₂, -N(R⁷)₂, -CON(R⁷)₂, -COR⁷, -OM, -CO₂M, -SO₃M, -PO₃M, -OPO₃M or -N(R⁷)₃Z¹, wherein R⁷ represents a linear, branched or cyclic alkyl group, an aryl group or an aralkyl group, M represents a hydrogen atom, an alkali metal, an alkaline earth metal or an onium, and Z¹ represents a halogen ion. In the case of having a plurality of R⁷'s as in -CON(R⁷)₂, R⁷'s may combine with each other to form a ring, and the ring formed may be a heterocyclic ring containing a heteroatom such as oxygen atom, sulfur atom and nitrogen atom. R⁷ may further have a substituent, and examples of the substituent which can be introduced here are the same as those of the substituent which can be introduced when each of R³, R⁴, R⁵ and R⁶ is an alkyl group.

R⁷ is preferably a group having a carbon number of 1 to 8, and specific preferred examples thereof include a methyl group, an ethyl group, a propyl group, a butyl group, a pentyl group, a hexyl group, a heptyl group, an octyl group, an isopropyl group, an isobutyl group, an s-butyl group, a tert-butyl group, an isopentyl group, a neopentyl group, a 1-methylbutyl group, an isohexyl group, a 2-ethylhexyl group, a 2-methylhexyl group, and a cyclopentyl group. M is a hydrogen atom, an alkali metal such as lithium, sodium and potassium, an alkaline earth metal such as calcium and barium, or an onium such as ammonium, iodonium and sulfonium. Specific preferred examples of Y include -NHCOCH₃, -CONH₂, -CON(CH₃)₂, - COOH, -SO₃⁻NMe₄⁺, -SO₃-K⁺, -(CH₂CH₂O)ₙH, and a morpholyl group. Among these, -NHCOCH₃, -CONH₂, -CON (CH₃)₂, -SO₃⁻K⁺ and - (CH₂CH₂O)ₙH are more preferred. In the formula above, n preferably represents an integer of 1 to 100.

The above-described hydrophilic polymer has a hydrophilic functional group exhibiting hydrophilicity, which is represented by Y in the formula, and the density of this functional group is preferably higher, because higher surface hydrophilicity is obtained. The density of the hydrophilic functional group can be expressed by the molar number of functional group per g of the hydrophilic polymer and is preferably from 1 to 30 meq/g, more preferably from 2 to 20 meq/g, and most preferably from 3 to 15 meq/g.
The copolymerization ratio of the hydrophilic polymer can be arbitrarily set such that the amount of the hydrophilic functional group Y falls in the above-described range. The molar ratio of (m) of the monomer containing Y and the molar ratio (n) of the monomer containing X are preferably in the range of m/n = 30/70 to 99/1, more preferably m/n = 40/60 to 98/2, and most preferably m/n = 50/50 to 97/3. When m is a ratio of m/n=30/70 or more, hydrophilicity is not lacking, whereas when n is a ratio of m/n=99/1 or more, the amount of the reactive group is enough and satisfactory curing as well as sufficiently high film strength are obtained.
Specific examples of the hydrophilic polymer having a structure represented by formula (1) are illustrated below, but the present invention is not limited thereto. M.W. indicates a mass average molecular weight. Incidentally, the polymers in specific examples below are a random copolymer where respective structural units shown are contained in the indicated molar ratio.

| | | |
|---|---|---|
| (I-1) | 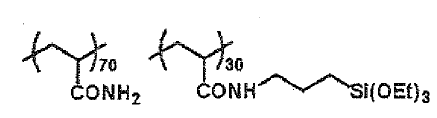 | M.W. 22,000 |
| (I-2) | 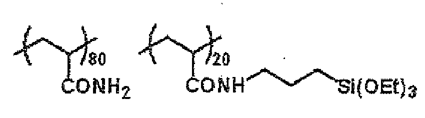 | M.W. 20,000 |
| (I-3) | 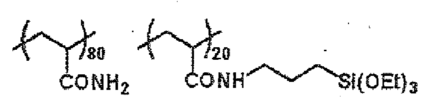 | M.W, 15,000 |
| (I-4) | 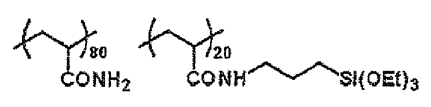 | N.W, 8,000 |
| (I-5) | 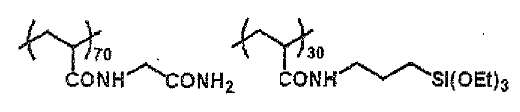 | M.W. 9,000 |
| (I-6) | 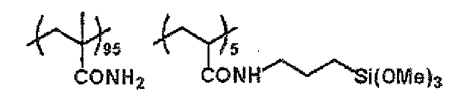 | M.W. 12,000 |
| (I-7) | 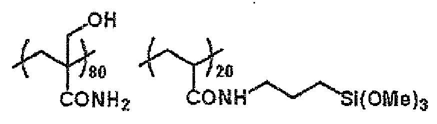 | M.W. 10,000 |
| (I-8) | 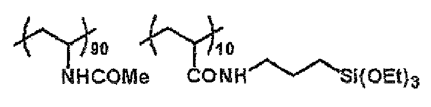 | M.W. 7,000 |
| (I-9) | 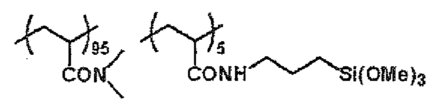 | M.W. 9,700 |
| (I-10) | 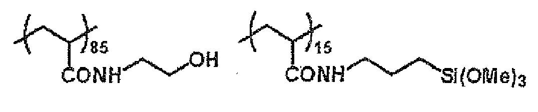 | M.W. 15,000 |

| | | |
|---|---|---|
| (I-11) | 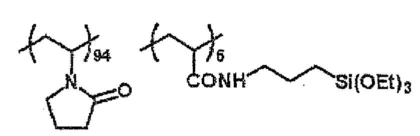 | M.W. 7,600 |
| (I-12) | 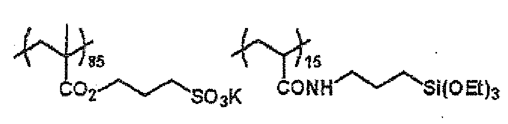 | M.W. 20,000 |
| (I-13) | 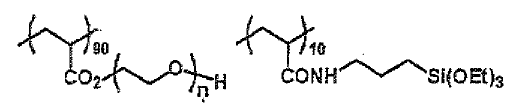 | n=9 M.W. 25,000 |
| (I-14) | 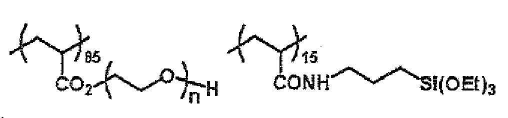 | n=23 M.W. 40,000 |
| (I-15) | 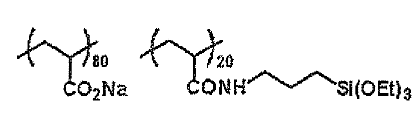 | M.W. 30,000 |
| (I-16) | 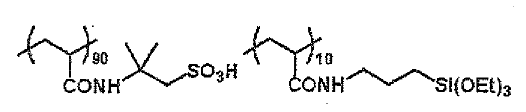 | M.W. 28,000 |
| (I-17) | 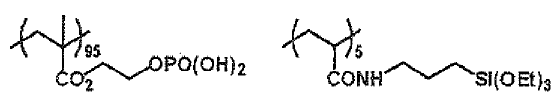 | M.W. 40,000 |
| (I-18) | 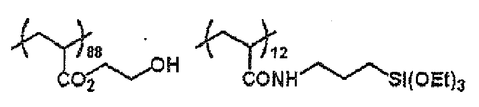 | M.W. 18,000 |
| (I-19) | 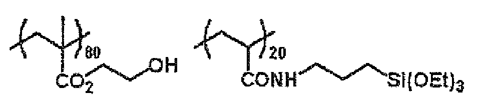 | M.W. 54,000 |
| (I-20) | 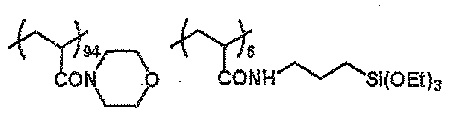 | M.W. 27,000 |

| | | |
|---|---|---|
| (I-21) | 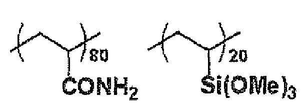 | M.W. 6,000 |
| (I-22) | 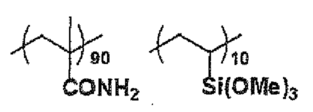 | M.W, 7,900 |
| (I-23) | 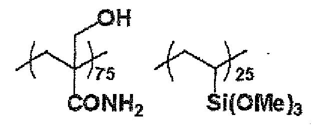 | M.W. 9,000 |
| (I-24) | 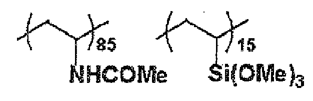 | M.W. 8,600 |
| (I-25) | 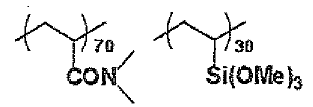 | M.W. 10,000 |
| (I-26) | 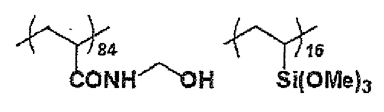 | M.W. 15,000 |
| (I-27) | 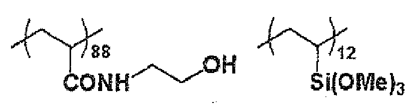 | M.W. 30,000 |
| (I-28) | 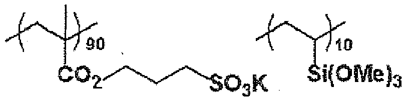 | M.W. 50,000 |
| (I-29) | 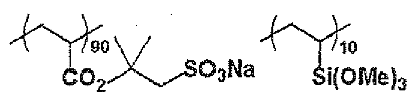 | M.W. 36,000 |
| (I-30) | 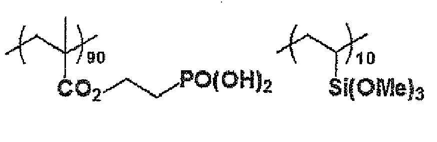 | M.W. 28,000 |

| | | |
|---|---|---|
| (I-31) | 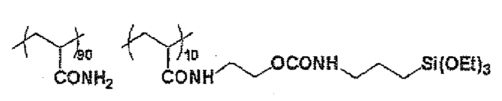 | M.W. 15,000 |
| (I-32) | 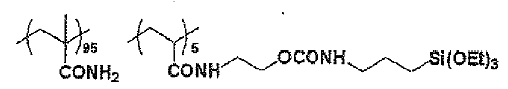 | M.W. 20,000 |
| (I-33) | 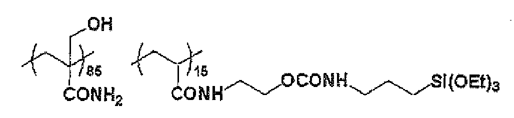 | M.W.I 3,000 |
| (I-34) | 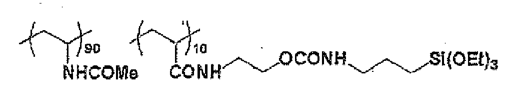 | M.W. 25,005 |
| (I-35) | 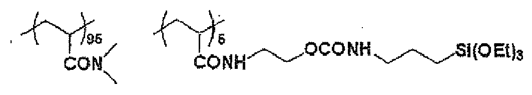 | M,W, 35,000 |
| (I-36) | 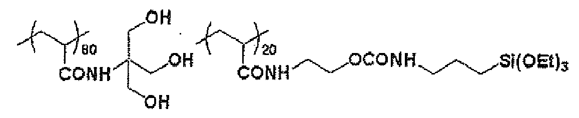 | M.W 43,000 |
| (I-37) | 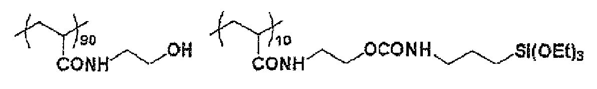 | M.W. 23,000 |
| (I-38) | 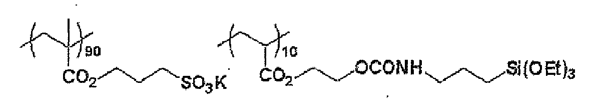 | M.W. 50,000 |
| (I-39) | 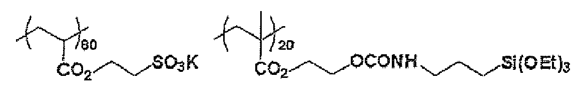 | M.W. 36,000, |
| (I-40) | 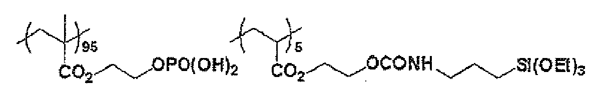 | M.W. 40,000 |

| | | |
|---|---|---|
| (I-41) | 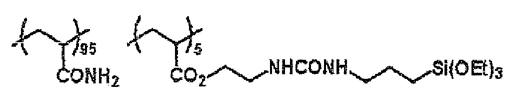 | M.W. 20,000 |
| (I-42) | 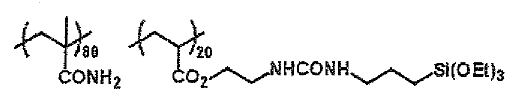 | M.W. 9,000 |
| (I-43) | 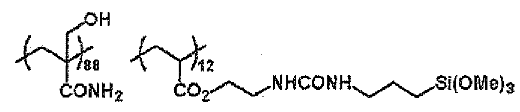 | M.W. 105,000 |
| (I-44) | 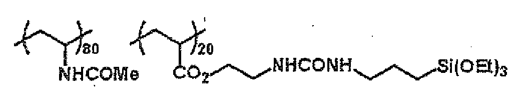 | M.W. 80,000 |
| (I-45) | 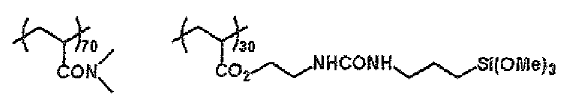 | M.W. 62,000 |
| (I-46) | 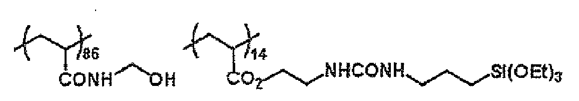 | M.W. 23,000 |
| (I-47) | 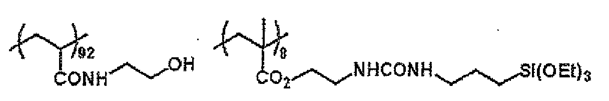 | M.W.39,000 |
| (I-48) | 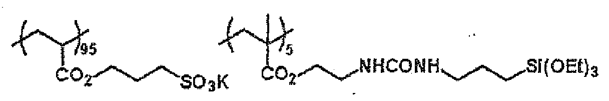 | M.W. 20,000 |
| (I-49) | 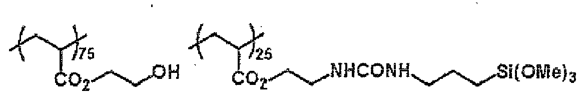 | M.W.11,000 |
| (I-50) | 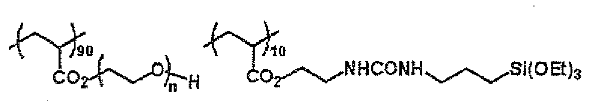 | n=4 M.W. 70,000 |

| | | |
|---|---|---|
| (I-51) | 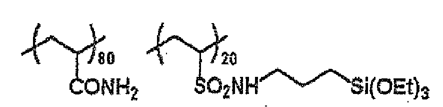 | M.W. 30,000 |
| (I-52) | 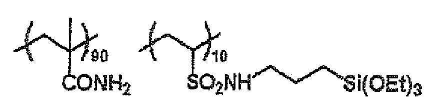 | M.W. 15,000 |
| (I-53) | 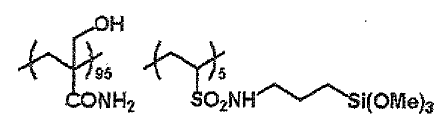 | M.W. 25,000 |
| (I-54) | 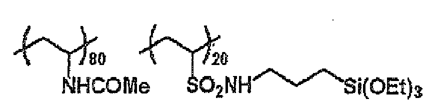 | M.W. 180,000 |
| (I-55) | 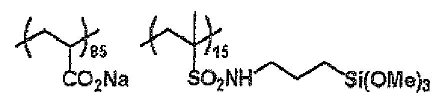 | M.W. 52,000 |
| (I-56) | 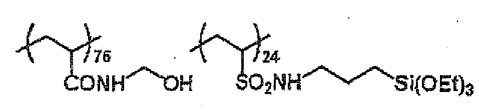 | M.W. 25,000 |
| (I-57) | 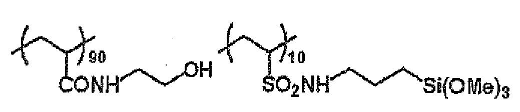 | M.W. 60,000 |
| (I-58) | 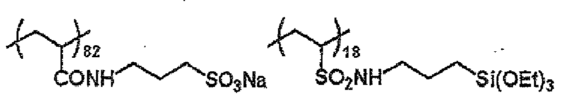 | M.W. 8,000 |
| (I-59) | 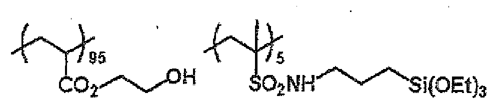 | M.W. 200,000 |
| (I-60) | 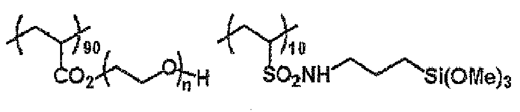 | n=9 M.W. 97,000 |

| | | |
|---|---|---|
| (I-61) | 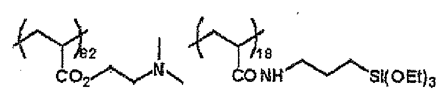 | M.W. 25,000 |
| (I-62) | 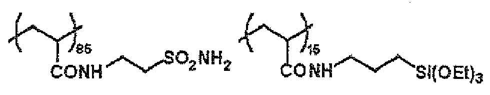 | M.W. 21,000 |
| (I-63) | 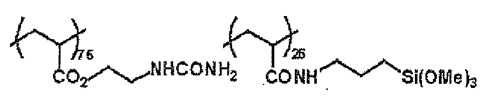 | M.W. 40,000 |
| (I-64) | 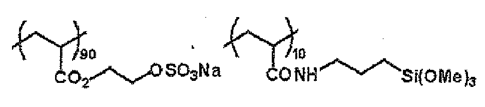 | M.W. 15,000 |
| (I-65) | 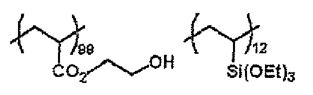 | M.W. 40,000 |
| (I-66) | 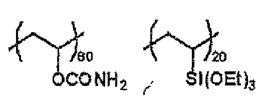 | M.W. 32,000 |
| (I-67) | 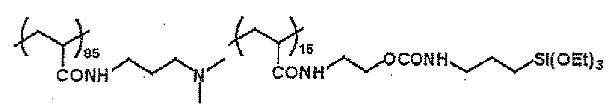 | M.W. 10,000 |
| (I-68) | 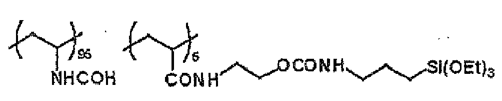 | M.W. 40,000 |
| (I-69) | 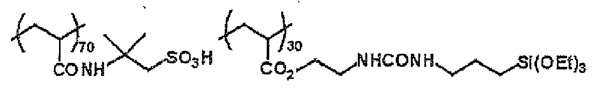 | M.W. 28,000 |
| (I-70) | 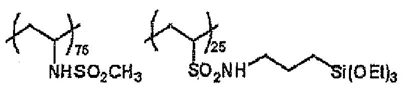 | M.W. 45,000 |

| | | |
|---|---|---|
| (I-71) | 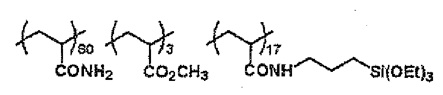 | M.W. 18,000 |
| (I-72) | 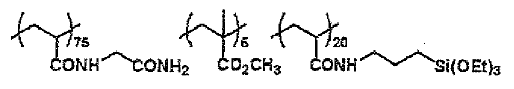 | M.W. 29,000 |
| (I-73) | 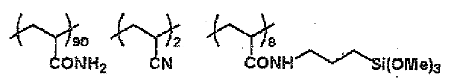 | M.W. 30,000 |
| (I-74) | 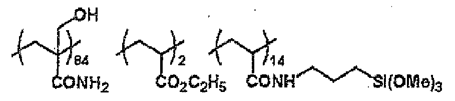 | M.W. 17,000 |
| (I-75) | 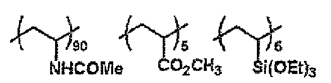 | M.W. 25,000 |
| (I-76) | 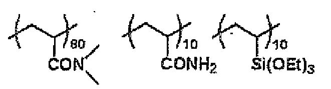 | M.W. 18,000 |
| (I-77) | 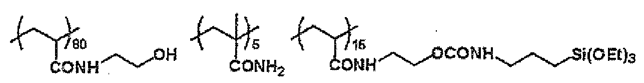 | M.W. 35,000 |
| (I-78) | 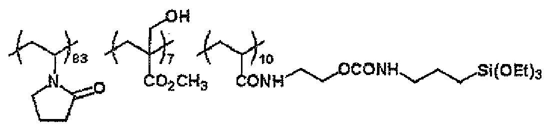 | M.W.30,000 |
| (I-79) | 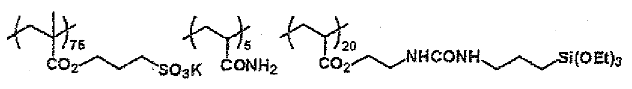 | M.W. 12,000 |
| (I-80) | 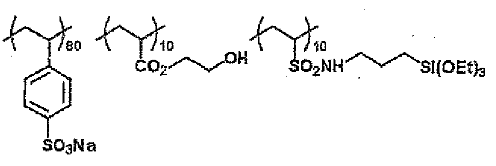 | M.W. 55,000 |

| | | |
|---|---|---|
| (I-81) | 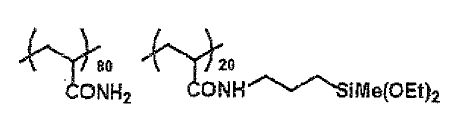 | M.W. 23,000 |
| (I-82) | 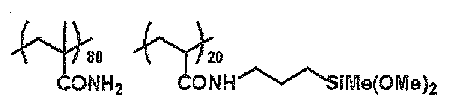 | M.W. 21,000 |
| (I-83) | 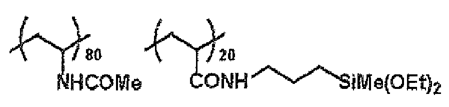 | M.W. 30,000 |
| (I-84) | 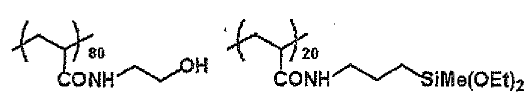 | M.W.18,000 |
| (I-85) | 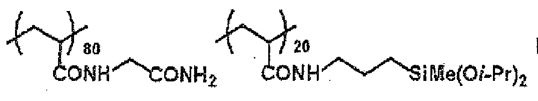 | M.W. 25,000 |
| (I-86) | 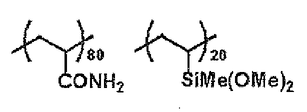 | M.W. 32,000 |
| (I-87) | 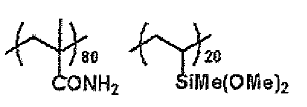 | M.W. 18,000 |
| (I-88) | 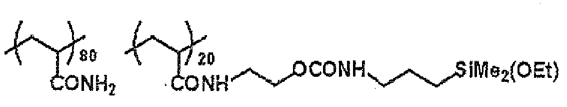 | M.W. 40,000 |
| (I-89) | 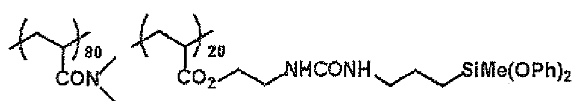 | M.W. 19,000 |
| (I-90) | 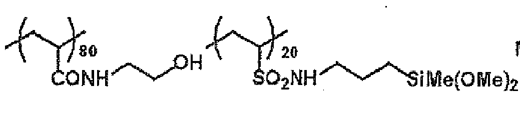 | M.W. 35,000 |

These compounds for synthesizing the above-described hydrophilic polymer are commercially available or can be easily synthesized.
As for the radical polymerization method to synthesize the hydrophilic polymer, any of conventionally known methods may also be used. The general radical polymerization methods are specifically described, for example, in Shin Kobunshi Jikken Gaku 3, Kobunshi no Gousei to Hanno 1 (New Polymer Experimentation 3, Synthesis and Reaction of Polymer 1), compiled by Polymer Society Japan, Kyoritsu Shuppan, Shin Jikken Kagaku Koza 19, Kobunshi Kagaku (I) lecture on New Experimental Chemistry 19, Polymer Chemistry (I)), compiled by The Chemical Society of Japan, Maruzen, and Busshitsu Kogaku Koza, Kobunshi Gousei Kagaku (Lecture on Substance Engineering, Polymer Synthesis Chemistry), Publishing Division of Tokyo Denki University, and these methods can be applied.

The mass average molecular weight of the hydrophilic polymer having a structure represented by formula (1) is preferably 1,000,000 or less, more preferably from 1,000 to 1,000,000, and most preferably from 10,000 to 50,000.
If the molecular weight is excessively large, the viscosity of the coating solution shows an undue rise, whereas if the molecular weight is too small, the adherence, hydrophilicity and the like may be insufficient.

The hydrophilic polymer above can form a crosslinked film in the state of being mixed with a hydrolyzed polycondensate of the later-described metal alkoxide. The hydrophilic polymer as an organic component participates in the strength or flexibility of the film, and particularly, good film properties are obtained when the viscosity of the hydrophilic polymer is from 0.1 to 100 mPa·s (measured as an aqueous 5% solution at 25°C), preferably from 0.5 to 70 mPa·s, more preferably from 1 to 50 mPa·s. The viscosity can be measured by an E-type viscometer (RE80L, trade name, manufactured by Tokyo Keiki Co., Ltd.).

The hydrophilic polymer above may also be a copolymer with other monomers described below. Examples of the other monomer used include known monomers such as acrylic acid esters, methacrylic acid esters, acrylamides, methacrylamides, vinyl esters, styrenes, acrylic acid, methacrylic acid, acrylonitrile, maleic anhydride and maleic acid imide. By copolymerizing such monomers, various properties such as film-forming property, film strength, hydrophilicity, hydrophobicity, solubility, reactivity and stability, can be improved.

Specific examples of the acrylic acid esters include methyl acrylate, ethyl acrylate, (n- or i-)propyl acrylate, (n-, i-, sec- or tert-)butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenethyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate and 2-(hydroxyphenylcarbonyloxy)ethyl acrylate.

Specific examples of the methacrylic acid esters include methyl methacrylate, ethyl methacrylate, (n- or i-)propyl methacrylate, (n-, i-, sec- or tert-)butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate and 2-(hydroxyphenylcarbonyloxy)ethyl methacrylate.

Specific examples of the acrylamides include acrylamide, N-methylacrylamide, N-ethylacrylamide, N-propylacrylamide, N-butylacrylamide, N-benzylacrylamide, N-hydroxyethylacrylamide, N-phenylacrylamide, N-tolylacrylamide, N-(hydroxyphenyl)acrylamide, N-(sulfamoylphenyl)acrylamide, N-(phenylsulfonyl)acrylamide, N-(tolylsulfonyl)acrylamide, N,N-dimethylacrylamide, N-methyl-N-phenylacrylamide and N-hydroxyethyl-N-methylacrylamide.

Specific examples of the methacrylamides include methacrylamide, N-methylmethacrylamide, N-ethylmethacrylamide, N-propylmethacrylamide, N-butylmethacrylamide, N-benzylmethacrylamide, N-hydroxyethylmethacrylamide, N-phenylmethacrylamide, N-tolylmethacrylamide, N-(hydroxyphenyl)methacrylamide, N-(sulfamoylphenyl)methacrylamide, N-(phenylsulfonyl)methacrylamide, N-(tolylsulfonyl)methacrylamide, N,N-dimethylmethacrylamide, N-methyl-N-phenylmethacrylamide and N-hydroxyethyl-N-methylmethacrylamide.

Specific examples of the vinyl esters include vinyl acetate, vinyl butyrate and vinyl benzoate.
Specific examples of the styrenes include styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorostyrene, dichlorostyrene, bromostyrene, iodostyrene, fluorostyrene and carboxystyrene.

As for the proportion of the other monomer used to synthesize the copolymer, the amount used needs to be large enough to improve various properties but in order to ensure adequate function as a hydrophilic film and sufficiently obtain the advantage by the addition of the hydrophilic polymer, the proportion is preferably not too much large. Accordingly, the total proportion of other monomers in the hydrophilic polymer is preferably 50 mass% or less.

In the hydrophilic composition, the (A-1) hydrophilic polymer having at least one hydrolyzable alkoxysilyl group on the polymer side chain is preferably contained in an amount of 5 to 99.5 mass%, more preferably from 15 to 99.5%, based on the solid content. The solid content as used herein indicates a solid content excluding the solvent that volatilizes.

### (B) Metal Complex Catalyst

The metal complex catalyst used in the formation of the hydrophilic film of the present invention plays a role of accelerating the hydrolysis and polycondensation of the hydrolyzable alkoxysilyl group in the hydrophilic polymer and causing the hydrophilic polymers to bind with each other. In particular, the metal complex catalyst is preferably a metal complex composed of a metal element selected from Groups 2A, 3B, 4A and 5A of the periodic table and an oxo- or hydroxy oxygen-containing compound selected from a β-diketone, a ketoester, a hydroxycarboxylic acid, an ester thereof, an aminoalcohol and an enolic active hydrogen compound.
Among the constituent metal elements, a Group 2A element such as Mg, Ca, Sr and Ba, a Group 3B element such as Al and Ga, a Group 4A element such as Ti and Zr, and a Group 5A element such as V, Nb and Ta, are preferred. These metal elements each forms a complex having an excellent catalyst effect. Above all, complexes formed from Zr, Al and Ti are excellent and preferred.

In the present invention, examples of the oxo- or hydroxy oxygen-containing compound constituting the ligand of the metal complex include β-diketones such as acetylacetone(2,4-pentanedione) and 2,4-heptanedione; ketoesters such as methyl acetoacetate, ethyl acetoacetate and butyl acetoacetate; hydroxycarboxylic acids and esters thereof, such as lactic acid, methyl lactate, salicylic acid, ethyl salicylate, phenyl salicylate, malic acid, tartaric acid and methyl tartrate; ketoalcohols such as 4-hydroxy-4-methyl-2-pentanone, 4-hydroxy-2-pentanone, 4-hydroxy-4-methyl-2-heptanone and 4-hydroxy-2-heptanone; aminoalcohols such as monoethanolamine, N,N-dimethylethanolamine, N-methyl-monoethanolamine, diethanolamine and triethanolamine; enolic active compounds such as methylolmelamine, methylolurea, methylolacrylamide and diethyl malonate; and compounds having a substituent on the methyl group, methylene group or carbonyl carbon of acetylacetone(2,4-pentanediol).

The ligand is preferably acetylacetone or an acetylacetone derivative. The acetylacetone derivative as used in the present invention indicates a compound having a substituent on the methyl group, methylene group or carbonyl carbon of acetylacetone. Examples of the substituent substituted on the methyl group of acetylacetone include a linear or branched alkyl group, an acyl group, a hydroxyalkyl group, a carboxyalkyl group, an alkoxy group and an alkoxyalkyl group, each having a carbon number of 1 to 3. Examples of the substituent substituted on the methylene group of acetylacetone include a carboxyl group, a linear or branched carboxyalkyl group having a carbon number of 1 to 3, and a hydroxyalkyl group having a carbon number of 1 to 3. Examples of the substituent substituted on the carbonyl carbon of acetylacetone include an alkyl group having a carbon number of 1 to 3, and in this case, a hydrogen atom is added to the carbonyl oxygen to form a hydroxyl group.

Specific preferred examples of the acetylacetone derivative include ethylcarbonylacetone, n-propylcarbonylacetone, i-propylcarbonylacetone, diacetylacetone, 1-acetyl-1-propionyl-acetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone, and diacetone alcohol.

Among these, acetylacetone and diacetylacetone are more preferred. The complex of this acetylacetone derivative with the metal element above is a mononuclear complex in which from 1 to 4 acetylacetone derivative molecules are coordinated per one metal element, and in the case where the number of coordination bonds of the metal element is larger than the total number of coordination bonds of acetylacetone derivatives, the metal element may be coordinated with a ligand commonly used in a normal complex, such as water molecule, halogen ion, nitro group and ammonio group.

Preferred examples of the metal complex include tris(acetylacetonato)aluminum complex salt, di(acetylacetonato)aluminum·aquo complex salt, mono (acetylacetonato) aluminum·chloro complex salt, di(diacetylacetonato)aluminum complex salt, aluminum ethylacetoacetate-diisopropylate, aluminum tris(ethylacetoacetate), cyclic aluminum oxide-isopropylate, tris(acetylacetonato)barium complex salt, di(acetylacetonato)titanium complex salt, tris(acetylacetonato)titanium complex salt, di-i-propoxy·bis(acetylacetonato)titanium complex salt, zirconium tris(ethylacetoacetate), and zirconium tris(benzoate) complex salt. These metal complexes have high stability in an aqueous coating solution and are excellent in the effect of accelerating the gelling in a sol-gel reaction at the drying under heating. Above all, aluminum ethylacetoacetate-diisopropylate, aluminum tris(ethylacetoacetate), di(acetylacetonato)titanium complex salt and zirconium tris(ethylacetoacetate) are more preferred.

In the specification of the present invention, description of the counter salt for the metal complex above is omitted, but any kind of counter salt may be used as long as it is a water-soluble salt capable of keeping the neutrality of the electric charge as a complex compound. For example, a salt form ensuring the stoichiometric neutrality, such as nitrate, halogen acid salt, sulfate and phosphate, is used. The behavior of the metal complex in the silica sol-gel reaction is described in detail in J. Sol-Gel, Sci. and Tec., 16, 209 (1999). As for the reaction mechanism, the following scheme is presumed. That is, the metal complex is considered to be stable by taking a coordination structure in a coating solution but at a dehydrating condensation reaction starting in the heating/drying process after coating, accelerates the crosslinking by an acid catalyst-like mechanism. Anyhow, use of this metal complex leads to improving the aging stability of coating solution and the surface quality of film and satisfying both high hydrophilicity and high durability.

Other than the metal complex catalyst above, a catalyst capable of accelerating the hydrolysis and polycondensation of the metal alkoxide compound selected from Si, Ti, Zr and Al and bringing about binding to the hydrophilic polymer may be used in combination. Examples of such a catalyst include a compound having acidity, such as hydrogen halide (e.g., hydrochloric acid), carboxylic acid (e.g., nitric acid, sulfuric acid, sulfurous acid, hydrogen sulfide, perchloric acid, hydrogen peroxide, carbonic acid, formic acid, acetic acid), substituted carboxylic acid where R in the structural formula RCOOH of the carboxylic acid is substituted with another element or a substituent, and sulfonic acid (e.g., benzenesulfonic acid); and a basic compound such as ammoniacal base (e.g., aqueous ammonia) and amines (e.g., ethylamine, aniline).
The above-described metal complex catalyst is easily available as a commercial product or may also be obtained by a known synthesis method, for example, by a reaction of each metal chloride with an alcohol.
In the hydrophilic film-forming composition of the present invention, the metal complex catalyst is used in an amount of preferably from 0.1 to 50 mass%, more preferably from 0.5 to 20 mass%, based on the solid content. Also, as for the (B) metal complex catalyst, one kind of metal complex catalyst may be used alone, or two or more kinds thereof may be used in combination.

The hydrophilic composition for use in the present invention preferably contains (A-2) a hydrophilic polymer having at least one hydrolyzable alkoxysilyl group at the polymer terminal, in addition to the (A-1) hydrophilic polymer having at least one hydrolyzable alkoxysilyl group on the polymer side chain. The (A-2) hydrophilic polymer having at least one hydrolyzable alkoxysilyl group at the polymer terminal is preferably a hydrophilic polymer containing a structure represented by the following formula (2).

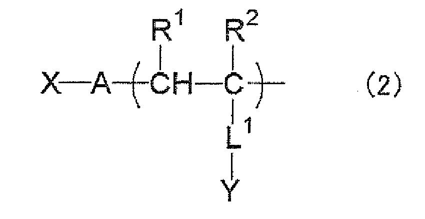

In formula (2), each of R¹ and R² independently represents a hydrogen atom or a hydrocarbon group, X represents a hydrolyzable alkoxysilyl group, each of A and L¹ independently represents a single bond or a linking group, and Y represents -NHCOR⁷, -CONH₂, -N(R⁷)₂, -CON(R⁷)₂, -COR⁷, -OM, - CO₂M, -SO₃M, -PO₃M, -OPO₃M or -N(R⁷)₃Z¹, wherein R⁷ represents an alkyl group, an aryl group or an aralkyl group, M represents a hydrogen atom, an alkali metal, an alkaline earth metal or an onium, and Z¹ represents a halogen ion.

The hydrophilic polymer having a structure represented by formula (2) is a hydrophilic polymer having a hydrolyzable alkoxysilyl group at one terminal and can be synthesized, for example, by radical-polymerizing a hydrophilic monomer (for example, an acrylamide, an acrylic acid or a potassium salt of 3-sulfopropyl methacrylate) in the presence of a chain transfer agent (described in Kanji Kamachi and Tsuyoshi Endo, Radical Jugo Handbook (Radical Polymerisation Handbook), NTS) or an Iniferter (described in Otsu, Macromolecules, 19, page 287 et seq. (1986)). Examples of the chain transfer agent include 3-mercaptopropionic acid, 2-aminoethanethiol hydrochloride, 3-mercaptopropanol, 2-hydroxyethyldisulfide and 3-mercaptopropyltrimethoxysilane. Also, a hydrophilic monomer (e.g., acrylamide) may be radical-polymerized using a radial polymerization initiator having a hydrolyzable alkoxysilyl group without using a chain transfer agent.
The mass average molecular weight of the hydrophilic polymer having a structure represented by formula (2) is preferably 1,000,000 or less, more preferably from 1,000 to 1,000,000, and most preferably from 2,000 to 50,000.

In formula (2), each of R¹ and R² independently represents the same substituent as R³, R⁴, R⁵ and R⁶ in formula (1), L¹ has the same meaning as L² and L³ in formula (1), and X has the same meaning as X in formula (1).

Specific examples of the hydrophilic polymer having a structure represented by formula (2) are illustrated blow, but the present invention is not limited thereto. In specific examples, * indicates the bonding position to the polymer.

| | | |
|---|---|---|
| (II-1) | 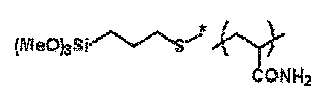 | M.W. 9,000 |
| (II-2) | 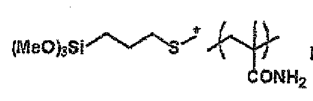 | M.W. 8.500 |
| (II-3) | 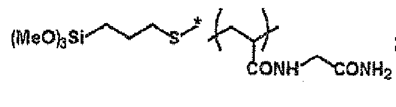 | M.W. 12,000 |
| (II-4) | 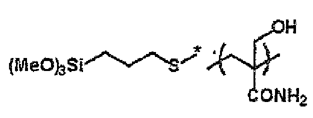 | M.W. 28,000 |
| (II-5) | 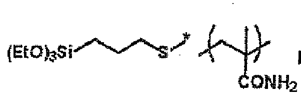 | M.W. 8,800 |
| (II-6) | 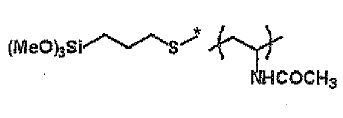 | M.W. 10,000 |
| (II-7) | 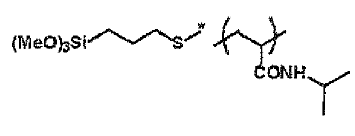 | M.W. 18,000 |
| (II-8) | 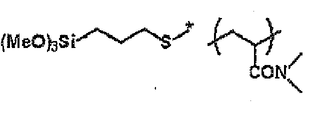 | M.W. 40,000 |
| (II-9) | 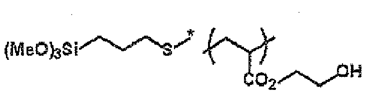 | M.W. 15,000 |
| (II-10) | 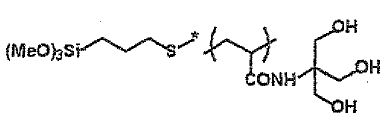 | M.W. 26,000 |

| | | |
|---|---|---|
| (II-11) | 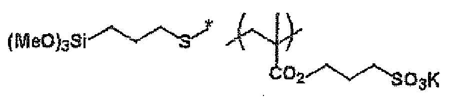 | M.W. 8,000 |
| (II-12) | 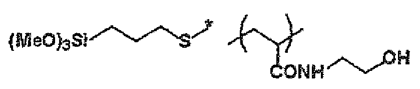 | M.W. 10,000 |
| (II-13) | 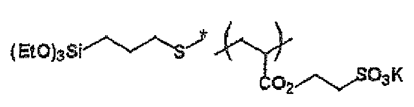 | M.W. 7,500 |
| (II-14) | 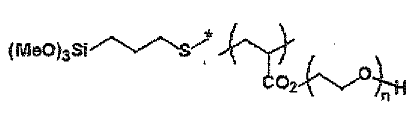 | n=23 M.W. 42,000 |
| (II-15) | 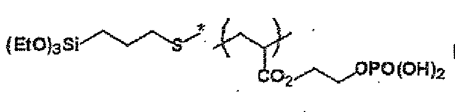 | M.W. 56,000 |
| (II-16) | 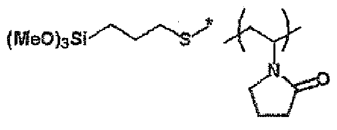 | M.W. 10,000 |
| (II-17) | 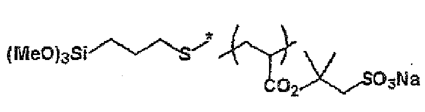 | M.W. 32,000 |
| (II-18) | 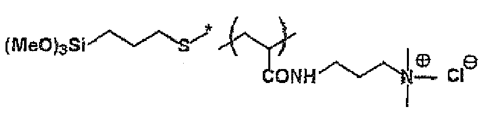 | M.W. 62,000 |
| (II-19) | 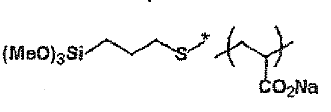 | M.W. 16,000 |
| (II-20) | 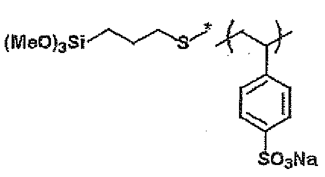 | M.W. 28,000 |

| | | |
|---|---|---|
| (II-21) | 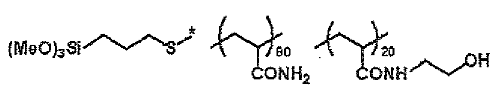 | M.W. 10,000 |
| (II-22) | 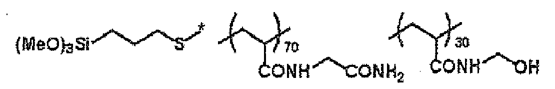 | M.W. 15,000 |
| (II-23) | 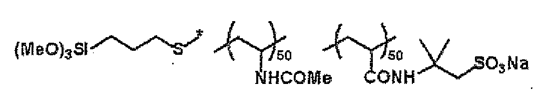 | M.W. 28,000 |
| (II-24) | 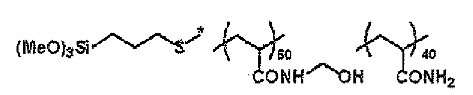 | M.W. 48,000 |
| (II-25) | 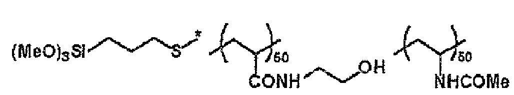 | M.W. 18,000 |
| (II-26) | 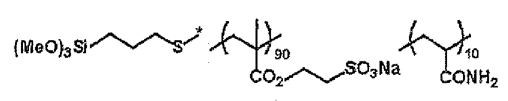 | M.W 52,000 |
| (II-27) | 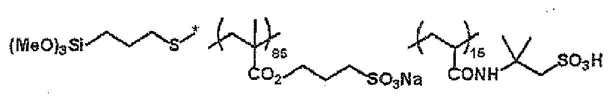 | M.W. 20,000 |
| (II-28) | 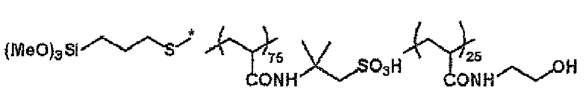 | M.W.12,000 |
| (II-29) | 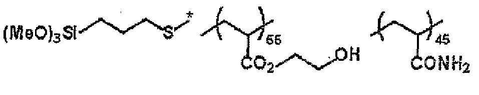 | M.W. 39,000 |
| (II-30) | 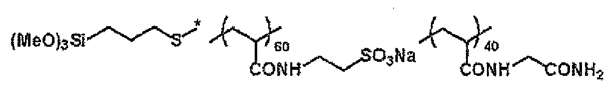 | M.W. 60,000 |

| | | |
|---|---|---|
| (II-31) | 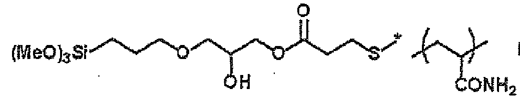 | M.W. 3,600 |
| (II-32) | 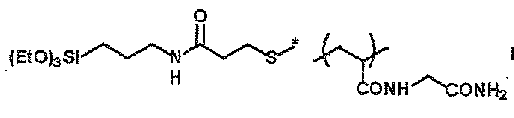 | M.W. 8,000 |
| (II-34) | 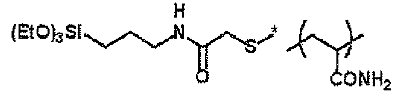 | M.W. 10,000 |
| | 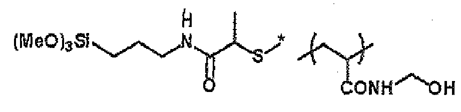 | M.W. 12,000 |
| (II-35) | 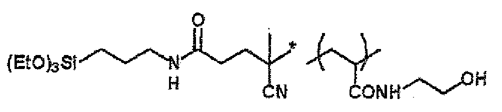 | M.W. 25,000 |
| (II-36) | 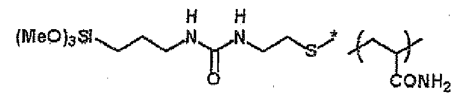 | M.W. 9,500 |
| (II-37) | 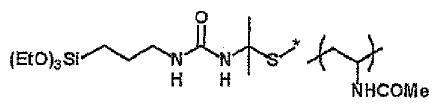 | M.W. 13,500 |
| (II-38) | 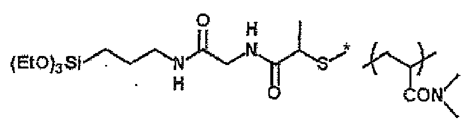 | M.W. 8,000 |
| (II-39) | 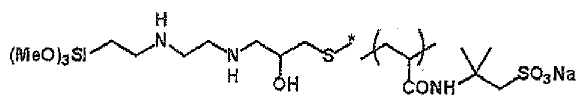 | M.W. 9,000 |
| (II-40) | 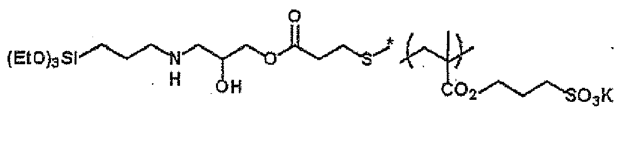 | M.W. 20,000 |

| | |
|---|---|
| (II-41) | 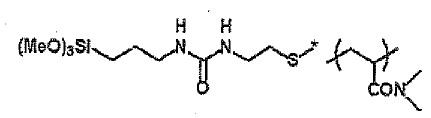 M.W. 20,000 |
| (II-42) | 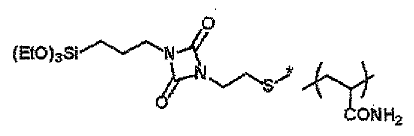 M.W. 35,000 |
| (II-43) | 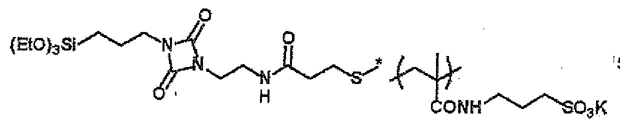 M.W. 15,000 |
| (II-44) | 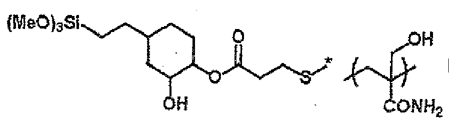 M.W. 14,500 |
| (II-45) | 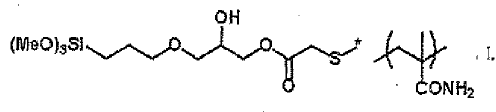 M.W. 9,000 |
| (II-46) | 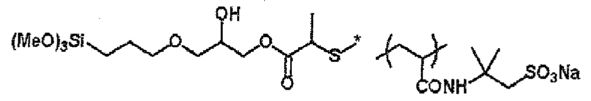 M.W. 5,000 |
| (II-47) | 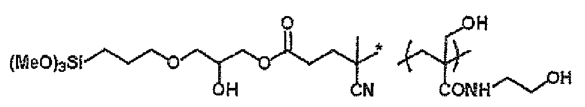 M.W. 45,000 |
| (II-48) | 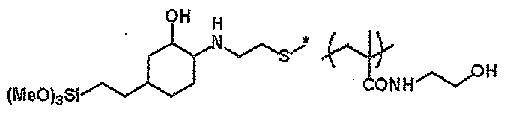 M.W.18,000 |
| (II-49) | 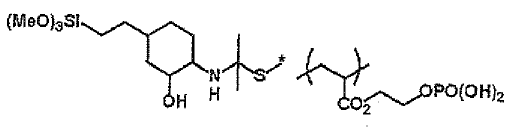 M.W. 6,000 |
| (II-50) | 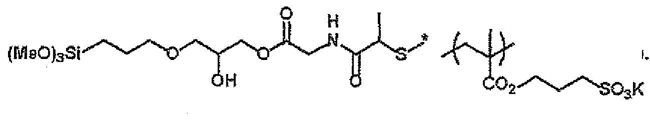 M.W. 7,500 |

| | |
|---|---|
| (II-51) | 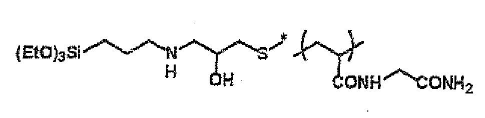 M.W. 10,000 |
| (II-62) | 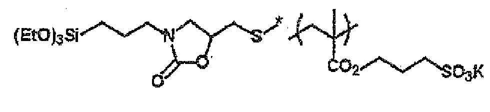 M.W. 16,400 |
| (II-53) | 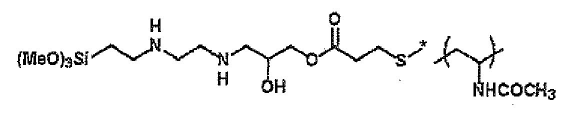 M.W. 30,000 |
| (II-54) | 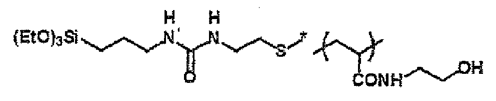 M.W. 8,000 |
| (II-55) | 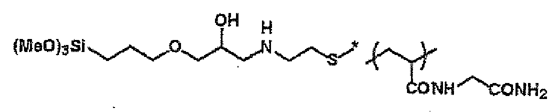 M.W. 8,000 |
| (II-56) | 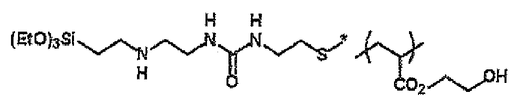 M.W. 9,500 |
| (II-57) | 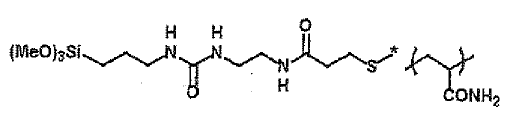 M.W. 30,000 |
| (II-58) | 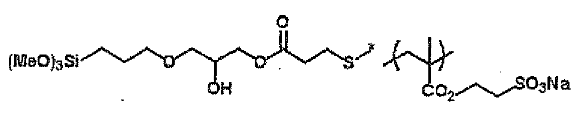 M-W. 16,000 |
| (II-59) | 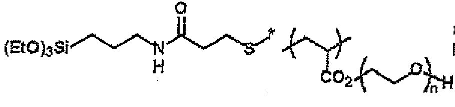 n=23 M.W. 8.900 |
| (II-60) | 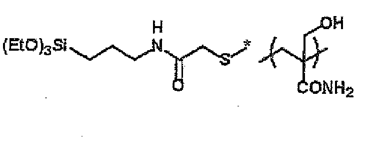 M.W. 25,000 |

| | |
|---|---|
| (II-61) | 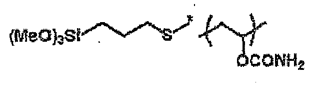 M.W. 12,000 |
| (II-62) | 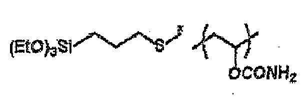 M.W. 10,000 |
| (II-63) | 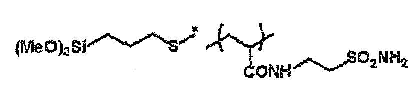 M.W. 18,000 |
| (II-64) | 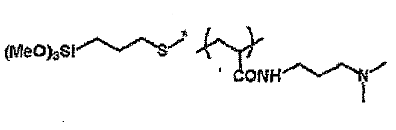 M.W. 15,000 |
| (II-65) | 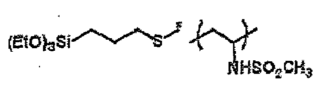 M.W. 20,000 |
| (II-66) | 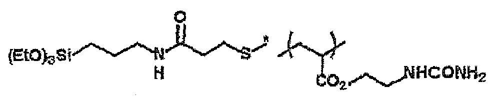 M.W. 22,000 |
| (II-67) | 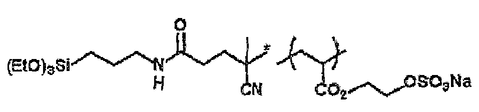 M.W. 16,000 |
| (II-68) | 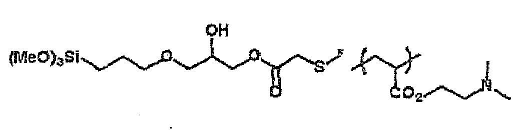 M.W. 30.000 |
| (II-69) | 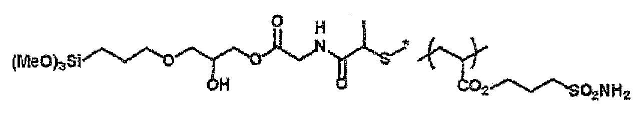 M.W 23,000 |
| (II-70) | 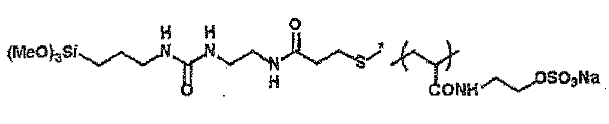 M.W 16,000 |

| | |
|---|---|
| (II-71) | 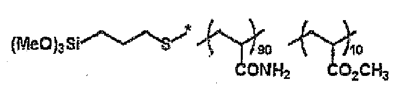 M.W. 22,000 |
| (II-72) | 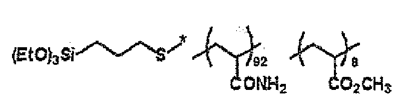 M.W. 19,000 |
| (II-73) | 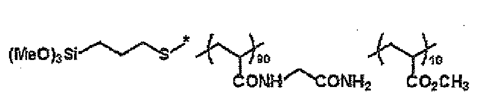 M.W. 10,000 |
| (II-74) | 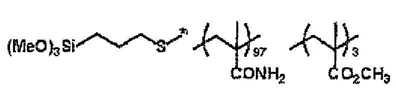 M.W. 17,000 |
| (II-75) | 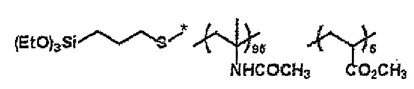 M.W. 30,000 |
| (II-76) | 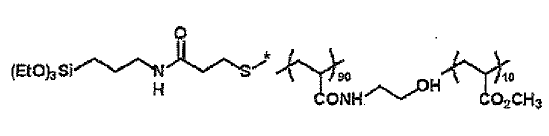 M.W. 40,000 |
| (II-77) | 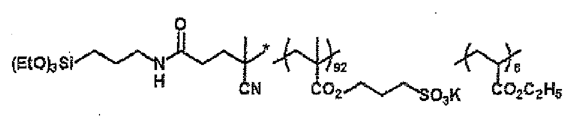 M.W. 35,000 |
| (II-78) | 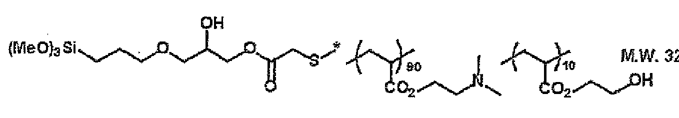 32,000 |
| (II-79) | 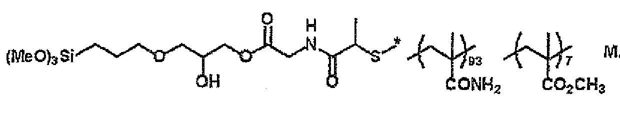 M.W. 18,000 |
| (II-80) | 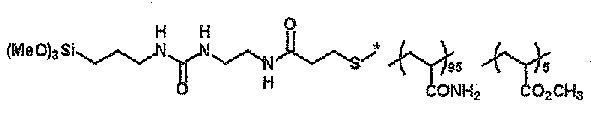 M.W. 24,000 |

| | |
|---|---|
| (II-81) | 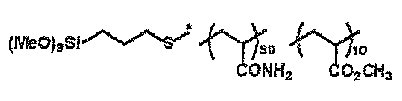 M.W. 22,000 |
| (II-82) | 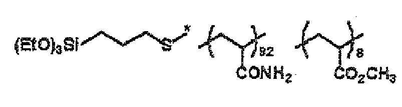 M.W. 19,000 |
| (II-83) | 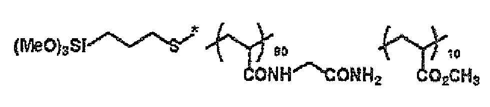 M.W. 10,000 |
| (II-84) | 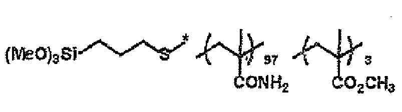 M.W. 17,000 |
| (II-85) | 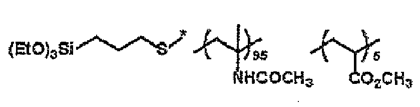 M.W. 30,000 |
| (II-86) | 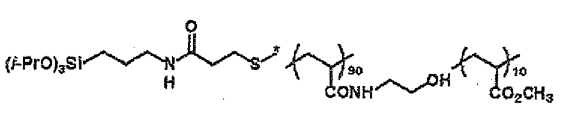 M.W. 40,000 |
| (II-87) | 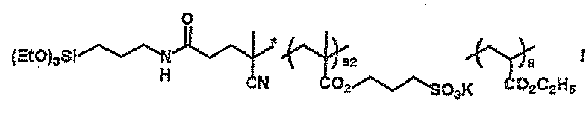 M.W. 35,000 |
| (II-88) | 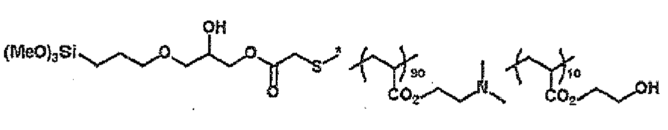 M.W. 32,000 |
| (II-89) | 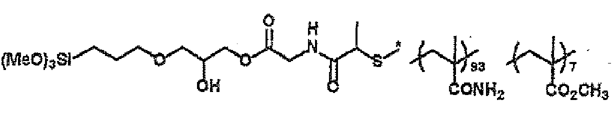 M.W. 18,000 |
| (II-90) | 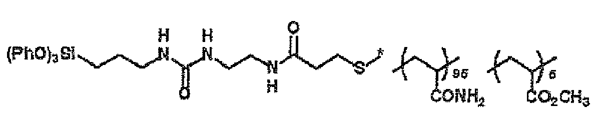 M.W. 24,000 |

| | |
|---|---|
| (II-91) | 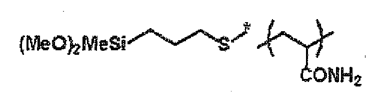 M.W. 10,000 |
| (II-92) | 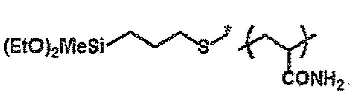 M.W. 9,000 |
| (II-93) | 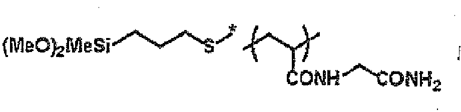 M.W. 12,000 |
| (II-94) | 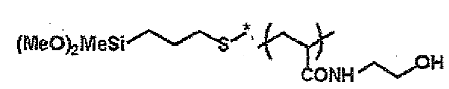 M.W. 17,000 |
| (II-95) | 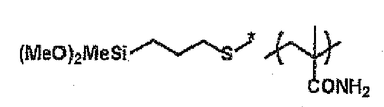 M.W. 28,000 |
| (II-96) | 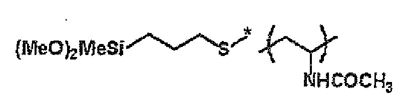 M.W. 20,000 |
| (II-97) | 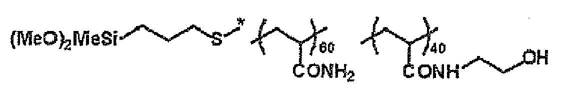 M.W. 10,000 |
| (II-98) | 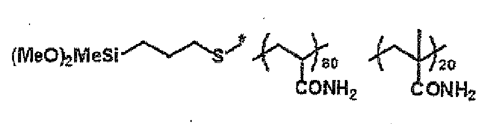 M.W. 8,000 |
| (II-99) | 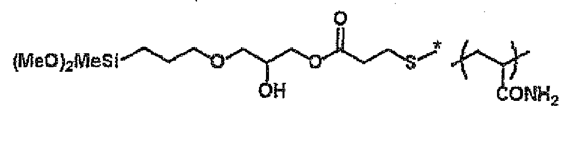 M.W. 6,500 |
| (II-100) | 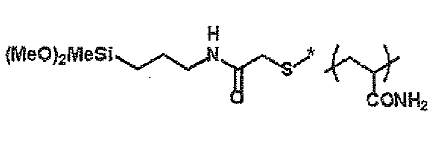 M.W. 9,000 |

The hydrophilic polymers exemplified above can be synthesized by the radical polymerization of a radical-polymerizable monomer represented by the following formula (i) by using a silane coupling agent represented by the following formula (ii) having a chain transfer function in the radical polymerization. The silane coupling agent (ii) has a chain transfer function and therefore, a polymer where a silane coupling group is introduced into the terminal of the polymer main chain can be synthesized in the radical polymerization.

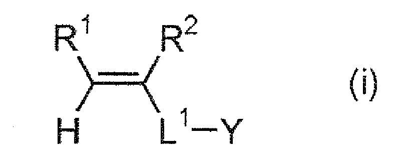

X-A-SH (ii)

In formulae (i) and (ii), A, R¹, R², L¹ and Y have the same meanings as in formula (I). These compounds are commercially available or can be easily synthesized.

In the hydrophilic composition, the (A-2) hydrophilic polymer having at least one hydrolyzable alkoxysilyl group at the polymer terminal is preferably contained in an amount of 0 to 50 mass%, more preferably from 5 to 50 mass%, based on the solid content.
In the hydrophilic composition, the mass ratio of {(A-2) hydrophilic polymer having a hydrolyzable alkoxysilyl group at the polymer terminal/(A-1) hydrophilic polymer having a hydrolyzable alkoxysilyl group on the polymer side chain) is preferably from 50/50 to 5/95.

### <Alkoxide Compound Containing Element Selected from Si, Ti, Zr and Al>

In the present invention, for the purpose of increasing the denseness of the hydrophilic film formed, an alkoxide compound of an element selected from Si, Ti, Zr and Al (sometimes referred to as a specific alkoxide) may be added to the hydrophilic film-forming composition. The specific alkoxide has a hydrolyzable and condensable functional group in its structure, and this is a hydrolyzable and polymerizable compound fulfilling the function as a crosslinking agent and forms a firm film having a crosslinked structure by the condensation and polymerization with the (A-1) hydrophilic polymer.
The specific alkoxide is preferably a compound represented by the following formula (3) or (4). In curing the hydrophilic film and forming a crosslinked structure, the (A-1) hydrophilic polymer, the (B) metal complex catalyst and the specific alkoxide represented by formula (3) or(4) are mixed, and the mixture is coated on a support surface, heated and dried.

(R²⁰)ₖ-Z-(OR²¹)₄₋ₖ (3)

Al-(QR²¹)₃ (4)

In formulae (3) and (4), R²⁰ represents a hydrogen atom, an alkyl group or an aryl group, R²¹ represents an alkyl group or an aryl group, Z represents Si, Ti or Zr, and k represents an integer of 0 to 2. In the case where each of R²⁰ and R²¹ represents an alkyl group, the carbon number of the alkyl group is preferably from 1 to 4. The alkyl group and aryl group each may have a substituent, and examples of the substituent which can be introduced include a halogen atom, an amino group and a mercapto group. Incidentally, these compounds are a low molecular compound and preferably have a molecular weight of 1,000 or less.

Specific examples of the specific alkoxide represented by formula (3) or (4) are set forth below, but the present invention is not limited thereto.
Examples of the compound where Z is Si, that is, the silicon-containing specific alkoxide, include trimethoxysilane, triethoxysilane, tripropoxysilane, tetramethoxysilane, tetraethoxysilane, tetrapropoxysilane, methyltrimethoxysilane, ethyltrimethoxysilane, propyltrimethoxysilane, methyltriethoxysilane, ethyltriethoxysilane, propyltrimethoxysilane, dimethyldimethoxysilane, diethyldiethoxysilane, γ-chloropropyltriethoxysilane, γ-mercaptopropyltrimethoxysilane, γ-mercaptopropyltriethoxysilane, γ-aminopropyltriethoxysilane, phenyltrimethoxysilane, phenyltriethoxysilane, phenyltripropoxysilane, diphenyldimethoxysilane, and diphenyldiethaxysilane. Among these, preferred are tetramethoxysilane, tetraethoxysilane, methyltrimethoxysilane, ethyltrimethoxysilane, methyltriethoxysilane, ethyltriethoxysilane, dimethyldiethoxysilane, phenyltrimethoxysilane, phenyltriethoxysilane, diphenyldimethoxysilane and diphenyldiethoxysilane.

Examples of the compound where Z is Ti, that is, the titanium-containing compound, include trimethoxytitanate, tetramethoxytitanate, triethoxytitanate, tetraethoxytitanate, tetrapropoxytitanate, chlorotrimethoxytitanate, chlorotriethoxytitanate, ethyltrimethoxytitanate, methyltriethoxytitanate, ethyltriethoxytitanate, diethyldiethoxytitanate, phenyltrimethoxytitanate and phenyltriethoxytitanate. "'
Examples of the compound where Z is Zr, that is, the zirconium-containing compound, include zirconates corresponding to the above-described compounds exemplified as the titanium-containing compound.
Examples of the compound represented by formula (4), that is, the aluminum-containing specific alkoxide, include trimethoxyaluminate, triethoxyaluminate, tripropoxyaluminate and tetraethoxyaluminate.
Among these alkoxide compounds, an alkoxide where Z is Si is preferred in view of coatability.

As for the specific alkoxide, one compound may be used alone, or two or more compounds may be used in combination.
In the hydrophilic composition of the present invention, the specific alkoxide is used in an amount of preferably from 0 to 80 mass%, more preferably from 2 to 70 mass%, based on the nonvolatile components.
The specific alkoxide is easily available as a commercial product or may also be obtained by a known synthesis method, for example, by a reaction of each metal chloride with an alcohol.

### <Surfactant>

In the present invention, a surfactant is preferably used so as to enhance the surface state of the film formed from the hydrophilic film-forming composition. Examples of the surfactant include a nonionic surfactant, an anionic surfactant, a cationic surfactant, an amphoteric surfactant and a fluorine-containing surfactant.

The nonionic surfactant for use in the present invention is not particularly limited and a conventionally known nonionic surfactant can be used. Examples thereof include polyoxyethylene alkyl ethers, polyoxyethylene alkylphenyl ethers, polyoxyethylene polystyrylphenyl ethers, polyoxyethylene polyoxypropylene alkyl ethers, glycerin fatty acid partial esters, sorbitan fatty acid partial esters, pentaerythritol fatty acid partial esters, propylene glycol monofatty acid esters, sucrose fatty acid partial esters, polyoxyethylene sorbitan fatty acid partial esters, polyoxyethylene sorbitol fatty acid partial esters, polyethylene glycol fatty acid esters, polyglycerin fatty acid partial esters, polyoxyethylenated castor oils, polyoxyethylene glycerin fatty acid partial esters, fatty acid diethanolamides, N,N-bis-2-hydroxyalkylamines, a polyoxyethylene alkylamine, a triethanolamine fatty acid ester, a trialkylamine oxide, a polyethylene glycol, and a copolymer of polyethylene glycol and polypropylene glycol.

The anionic surfactant for use in the present invention is not particularly limited and a conventionally known anionic surfactant can be used. Examples thereof include fatty acid salts, abietates, hydroxyalkanesulfonates, alkanesulfonates, dialkylsulfosuccinate salts, linear alkylbenzenesulfonates, branched alkylbenzenesulfonates, alkylnaphthalenesulfonates, alkylphenoxypolyoxyethylenepropylsulfonates, polyoxyethylenealkylsulfophenyl ether salts, an N-methyl-N-oleyltaurine sodium salt, a monoamide disodium N-alkylsulfosuccinate, petroleum sulfonates, sulfated beef tallow oil, sulfate salts of fatty acid alkyl ester, alkylsulfate salts, polyoxyethylene alkyl ether sulfate salts, fatty acid monoglyceride sulfate salts, polyoxyethylene alkylphenyl ether sulfate salts, polyoxyethylene styrylphenyl ether sulfate salts, alkylphosphate salts, polyoxyethylene alkyl ether phosphate salts, polyoxyethylene alkylphenyl ether phosphate salts, partially saponified styrene/maleic anhydride copolymerization products, partially saponified olefin/maleic anhydride copolymerization products, and naphthalenesulfonate formalin condensates.

The cationic surfactant for use in the present invention is not particularly limited and a conventionally known cationic surfactant can be used. Examples thereof include alkylamine salts, quaternary ammonium salts, polyoxyethylene alkylamine salts and polyethylene polyamine derivatives.
The amphoteric surfactant for use in the present invention is not particularly limited and a conventionally known amphoteric surfactant can be used. Examples thereof include carboxybetaines, aminocarboxylic acids, sulfobetaines, aminosulfuric esters and imidazolines.
The term "polyoxyethylene" in the above-described surfactants can be instead read as "polyoxyalkylene" such as polyoxymethylene, polyoxypropylene and polyoxybutylene, and these surfactants can also be used in the present invention.

The surfactant is more preferably a fluorine-containing surfactant containing a perfluoroalkyl group within the molecule. The fluorine-containing surfactant includes an anionic type such as perfluoroalkylcarboxylate, perfluoroalkylsulfonate and perfluoroalkylphosphoric ester; an amphoteric type such as perfluoroalkylbetaine; a cationic type such as perfluoroalkyltrimethylammonium salt; and a nonionic type such as perfluoroalkylamine oxide, perfluoroalkyl. ethylene oxide adduct, oligomer containing a perfluoroalkyl group and a hydrophilic group, oligomer containing a perfluoroalkyl group and a lipophilic group, oligomer containing a perfluoroalkyl group, a hydrophilic group and a lipophilic group, and urethane containing a perfluoroalkyl group and a lipophilic group. In addition, fluorine-containing surfactants described in JP-A-62-170950, JP-A-62-226143 and JP-A-60-168144 may also be suitably used.

In the hydrophilic film-forming composition, the surfactant is preferably used in an amount of preferably from 0.001 to 10 mass%, more preferably from 0.01 to 5 mass%, based on the nonvolatile components. One kind of surfactant may be used alone, or two or more kinds of surfactants may be used in combination.

Specific preferred examples of the surfactant are illustrated below, but the present invention is not limited thereto.

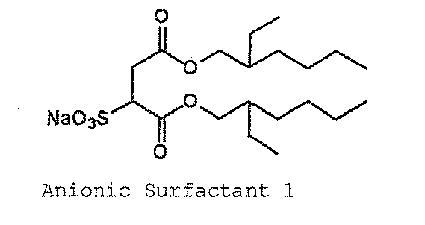

NaO₃SO-C₁₂H₂₅

Anionic Surfactant 2

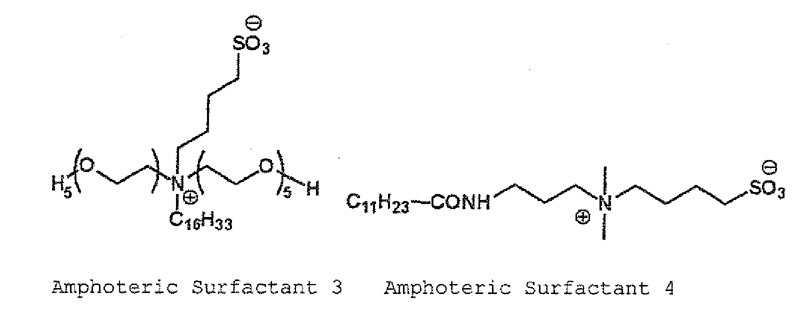

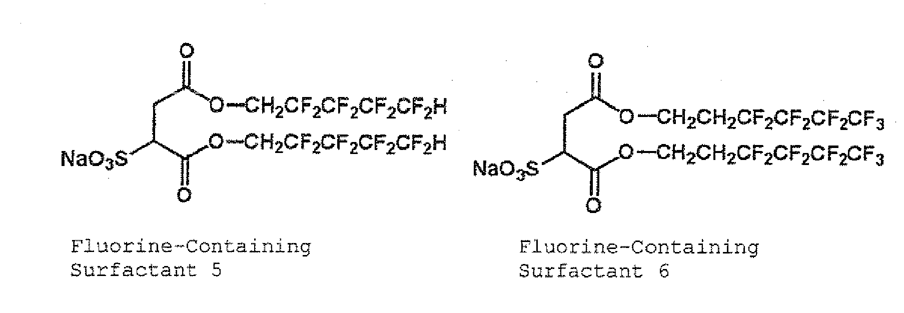

### [Antibacterial Agent]

The hydrophilic composition of the present invention is coated on a desired support to form a hydrophilic film, whereby a hydrophilic member can be obtained.
An antibacterial agent may be incorporated into the hydrophilic composition so as to impart antibacterial, antifungal and algicidal properties to the hydrophilic member of the present invention. In forming a hydrophilic film, a hydrophilic and water-soluble antibacterial agent is preferably incorporated. By virtue of incorporating a hydrophilic and water-soluble antibacterial agent, a surface hydrophilic member excellent in the antibacterial, antifungal and algicidal properties can be obtained without impairing the surface hydrophilicity.
As for the antibacterial agent, a compound incapable of reducing the hydrophilicity of the hydrophilic member is preferably added, and examples of such an antibacterial agent include an inorganic antibacterial agent and a water-soluble organic antibacterial agent. An antibacterial agent having an antiseptic effect on microorganisms in the environment, such as bacteria typified by *Staphylococcus aureus* and *Bacillus coli* and fungi typified by mold and yeast, is used.

The organic antibacterial agent includes, for example, a phenol ether derivative, an imidazole derivative, a sulfone derivative, an N·haloalkylthio compound, an anilide derivative, a pyrrole derivative, a quaternary ammonium salt, and pyridine-based, triazine-based, benzisothiazoline-based and isothiazoline-based antibacterial agents.
Examples thereof include, but are not limited to, 1,2-benzisothiazolin-3-one, N-fluorodichloromethylthiophthalimide, 2,3,5,6-tetrachloroisophthalonitrile, N-trichloromethylthio-4-cyclohexene-1,2-dicarboxyimide, copper 8-quinolinate, bis(tributyltin)oxide, 2-(4-thiazolyl)benzimidazole (hereinafter, referred to as "TBZ"), methyl 2-benzimidazolecarbamate (hereinafter, referred to as "BCM,"), 10,10'-oxybisphenoxyarsine (hereinafter, referred to as "OBPA"), 2,3,5,6-tetrachloro-4-(methyl-sulfone)pyridine, bis(2-pyridylthio-1-oxide) zinc (hereinafter, referred to as "ZPT"), N,N-dimethyl-N'-(fluorodichloromethylthio)-N'-phenylsulfamido(dichlorofluanide), poly-(hexamethylenebiguanide) hydrochloride, dithio-2-2'-bis(benzmethylamide), 2-methyl-4,5-trimethylene-4-isothiazolin-3-one, 2-bromo-2-nitro-1,3-propanediol, hexahydro-1,3-tris-(2-hydroxyethyl)-S-triazine, p-chloro-m-xylenol and 1,2-benzisothiazolin-3-one.
Such an organic antibacterial agent can be appropriately selected and used by taking into consideration the hydrophilicity, water resistance, sublimability, stability and the like. Among the organic antibacterial agents, 2-bromo-2-nitro-1,3-propanediol, TBZ, BCM, OBPA and ZPT are preferred in view of hydrophilicity, antibacterial effect and cost.

The inorganic antibacterial agent includes, for example, mercury, silver, copper, zinc, iron, lead and bismuth in descending order of antiseptic activity. For example, a metal or metal ion such as silver, copper, zinc or nickel is loaded on a support such as silicate-based support, phosphate-based support, oxide, glass, potassium titanate and amino acid. Examples of the inorganic antibacterial agent include, but are not limited to, a zeolite-based antimicrobial, a calcium silicate-based antimicrobial, a zirconium phosphate-based antimicrobial, a calcium phosphate-based antimicrobial, a zinc oxide-based antimicrobial, a soluble glass-containing antimicrobial, a silica gel-based antimicrobial, an activated carbon-based antimicrobial, a titanium oxide-based antimicrobial, a titania-based antimicrobial, an organometallic antimicrobial, an ion exchanger ceramic antimicrobial, a layered phosphate-quaternary ammonium salt-based antimicrobial, and an antibacterial stainless steel.

The naturally occurring antibacterial agent includes chitosan that is a basic polysaccharide obtained by hydrolyzing chitin contained in crustaceans such as crab and shrimp.
In the present invention, "HOLON KILLER BEADS CELLER (trade name)" of Nikko Co., which is composed of an amino metal having a metal compounded on both sides of an amino acid, is preferred.
This antibacterial agent is nonvolatile, readily interacts with the polymer or crosslinking agent component of the hydrophilic film, is capable of stable molecular dispersion or solid dispersion, allows effective exposure of the antibacterial agent to the hydrophilic film surface, does not dissolve out even when wetted with water, can sustain its effect over a long period of time, does not affect the human body, can be stably dispersed in the hydrophilic film or coating solution, and causes no deterioration of the hydrophilic film or coating solution.
Among the antibacterial agents described above, a silver-based inorganic antibacterial agent and a water-soluble organic antibacterial agent are most preferred because of their high antibacterial effect. Above all, a silver zeolite obtained by loading silver on zeolite that is a silicate-based support, an antibacterial agent obtained by loading silver on silica gel, 2-bromo-2-nitro-1,3-propanediol, TPN, TBZ, BCM, OBPA, and ZPT are preferred. Particularly preferred examples of the commercially available silver zeolite-based antibacterial agent include "Zeomic" of Shinagawa Fuel Co., Ltd., "Silwell" of Fuji Silysia Chemical Ltd., and "Bactenon" of Japan Electronic Materials Corp. In addition, "Novaron" of Toa Gosei Co., Ltd., where silver is loaded on an inorganic ion exchanger ceramic; "Atomy Ball" of Catalysts & Chemicals Industries Co., Ltd.; and "SAN-AI BAC P" (produced by San-Ai Oil Co., Ltd.) that is a triazine-based antimicrobial, are also preferred.

The content of the antibacterial agent is usually from 0.001 to 10 mass%, preferably from 0.005 to 5 mass%, more preferably from 0.01 to 3 mass%, still more preferably 0.02 to 1.5 mass%, and most preferably 0.05 to 1 mass%. When the content is 0.001 mass% or more, an effective antibacterial action can be obtained, and when the content is 10 mass% or less, the hydrophilicity as well as the aging property are not impaired and there is caused no adverse effect on the antifouling and antifogging properties.

### <Inorganic Fine Particle>

The hydrophilic film-forming composition of the present invention may contain an inorganic fine particle for the purpose of increasing the cured film strength of the hydrophilic film and enhancing the hydrophilicity and water retentivity.
Suitable examples of the inorganic fine particle include silica, alumina, magnesium oxide, titanium oxide, magnesium carbonate, calcium alginate, and a mixture thereof. Even when these inorganic fine particles have no photothermal conversion property, they can be used, for example, to strengthen the film or increase the interface adhesion thanks to surface roughening.
The average particle diameter of the inorganic fine particle is preferably from 5 nm to 10 µm, more preferably from 0.5 to 3 µm. Within this range, the particle is stably dispersed in the hydrophilic film and in turn, the film can advantageously maintain sufficiently high strength and hydrophilicity.
The above-described inorganic fine particle can be easily available as a commercial product, for example, as a colloidal silica dispersion.
The content of the inorganic fine particle is preferably 20 mass% or less, more preferably 10 mass% or less, based on the entire solid content of the hydrophilic film-forming composition.

### <Ultraviolet Absorber>

In the present invention, an ultraviolet absorber can be used from the standpoint of enhancing the weather resistance and durability of the hydrophilic film.
Examples of the ultraviolet absorber include benzotriazole-based compounds described in JP-A-58-185677, JP-A-61-190537, JP-A-2-782, JP-A-5-197075 and JP-A-9-34057, benzophenone-based compounds described in JP-A-46-2784, JP-A-5-194483 and U.S. Patent 3,214,463, cinnamic acid-based compounds described in JP-B-48-30492 (the term "JP-B" as used herein means an "examined Japanese patent publication"), JP-B-56-21141 and JP-A-10-88106, triazine-based compounds described in JP-A-4-298503, JP-A-8-53427, JP-A-8-239368, JP-A-10-182621 and JP-T-8-501291 (the term "JP-T" as used herein means a "published Japanese translation of a PCT patent application"), compounds described in Research Disclosure, No. 24239, and compounds capable of absorbing ultraviolet light and emitting fluorescent light, so-called fluorescent brightening agents, as typified by stilbene-based compounds and benzoxazole-based compounds.
The amount of the ultraviolet absorber added is appropriately selected according to the purpose but in general, the amount added is preferably from 0.5 to 15 mass% in terms of the solid content.

### <Antioxidant>

In the coating solution for forming the hydrophilic film, an antioxidant may be added so as to enhance the stability of the composition and hydrophilic film of the present invention. Examples of the antioxidant include those described in European Patent Publication Nos. 223739, 309401, 309402, 310551, 310552 and 459416, German Patent Publication No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and U.S. Patents 4,814,262 and 4,980,275.
The amount of the antioxidant added is appropriately selected according to the purpose but is preferably from 0.1 to 8 mass% in terms of the solid content.

### <Solvent>

In order to ensure the formability of a uniform coating film on a substrate at the time of forming a hydrophilic film of the hydrophilic member of the present invention, it is also effective to appropriately add an organic solvent to the coating solution for forming the hydrophilic film.
Examples of the solvent include a ketone-based solvent such as acetone, methyl ethyl ketone and diethyl ketone, an alcohol-based solvent such as methanol, ethanol, 2-propanol, 1--prapanol, 1-butanol and tert-butanol, a chlorine-based solvent such as chloroform and methylene chloride, an aromatic solvent such as benzene and toluene, an ester-based solvent such as ethyl acetate, butyl acetate and isopropyl acetate, an ether-based solvent such as diethyl ether, tetrahydrofuran and dioxane, and a glycol ether-based solvent such as ethylene glycol monomethyl ether and ethylene glycol dimethyl ether.
In this case, it is effective to add the solvent in a range not causing a problem in relation to VOC (volatile organic compounds), and the amount in the range is preferably from 0 to 50 mass%, more preferably from 0 to 30 mass%, based on the entire coating solution at the formation of the water-absorbing film.

### <Polymer Compound

In the hydrophilic film-forming composition of the present invention, various polymer compounds can be added for adjusting the physical properties of the hydrophilic film, within the range not inhibiting the hydrophilicity. Examples of the polymer compound which can be used include an acrylic polymer, a polyvinylbutyral resin, a polyurethane resin, a polyamide resin, a polyester resin, an epoxy resin, a phenol resin, a polycarbonate resin, a polyvinylbutyral resin, a polyvinylformal resin, shellac, a vinyl-based resin, an acrylic resin, a rubber-based resin, waxes, and other natural resins. Two or more of these may be used in combination. Above all, a vinyl-based copolymer obtained by the copolymerization of acrylic monomers is preferred. Furthermore, a copolymer containing, as a structural unit, a "carboxyl group-containing monomer", an "alkyl methacrylate" or an "allyl acrylate" is also preferably used.

In addition, for example, a leveling additive, a matting agent, waxes for adjusting the film properties, and a tackifier for improving the adherence to a substrate may be incorporated, if desired, in the range not inhibiting the hydrophilicity.
Specific examples of the tackifier include adhesive polymers having a high molecular weight described in JP-A-2001-49200, pages 5 and 6 (for example, a copolymerization product comprising an ester of (meth)acrylic acid and an alcohol containing an alkyl group having a carbon number of 1 to 20, an ester of (meth)acrylic acid and an alicyclic alcohol having a carbon number of 3 to 14, and an ester of (meth) acrylic acid and an aromatic alcohol having a carbon number of 6 to 14), and a low molecular weight tackifying resin having a polymerizable unsaturated bond.

### [Base Material]

The base material (support) for use in the present invention is not particularly limited, but glass, plastic, metal, ceramic, wood, stone, cement, concrete, fiber, cloth, paper, leather, and a combination or laminate thereof all may be suitably utilized. In particular, the base material is preferably a glass, plastic, stainless steel or aluminum substrate.
As for the glass substrate, any glass such as soda glass, lead glass and borosilicate glass may be used. Also, according to the purpose, float sheet glass, figured glass, frosted sheet glass, mesh glass, wired glass, tempered glass, laminated glass, double glass, vacuum glass, security glass, or highly insulating Low-E double glass may be used. Furthermore, the hydrophilic film may be coated directly on the green sheet glass, but one surface or both surfaces of the glass substrate may be subjected to a surface hydrophilizing treatment by oxidation, surface roughening or the like, for the purpose of enhancing the adherence of the hydrophilic film. Examples of the oxidation method include a corona discharge treatment, a glow discharge treatment, a chromic acid treatment (wet), a flame treatment, a hot air treatment, and an ozone/ultraviolet irradiation treatment. As for the surface roughening method, the surface may also be mechanically roughened by sandblasting, brush polishing or the like.

The plastic substrate for use in the present invention is not particularly limited, but examples thereof include polyester, polyethylene, polypropylene, cellophane, triacetyl cellulose, diacetyl cellulose, acetyl cellulose butyrate, polyvinyl chloride, polyvinylidene chloride, polyvinyl alcohol, ethylene vinyl alcohol, polystyrene, polycarbonate, polymethylpentene, polysulfone, polyether ketone, acryl, nylon, fluororesin, polyimide, polyetherimide and polyethersulfone films or sheets. Among these, a polyester film such as polyethylene terephthalate and polyethylene naphthalate is preferred. Incidentally, a plastic substrate with excellent transparency is preferred from an optical viewpoint, but a translucent or printed substrate is used depending on the usage. The thickness of the plastic substrate varies according to the other party stacked thereon. For example, in use for a portion having many curves, a thin substrate is preferred and a plastic substrate having a thickness of approximately from 6 to 50 µm is used. Also, in use for a flat plane or a portion requiring strength, a plastic substrate of 50 to 400 µm is used.
As for the base material in use as a fin stock, an aluminum-made substrate is preferred.

For the purpose of enhancing the adherence between the base material and the hydrophilic film, one surface or both surfaces of the base material may be subjected to a surface hydrophilizing treatment by oxidation, surface roughening or the like. Examples of the oxidation method include a corona discharge treatment, a glow discharge treatment, a chromic acid treatment (wet), a flame treatment, a hot air treatment, and an ozone/ultraviolet irradiation treatment. As for the surface roughening method, the surface may also be mechanically roughened by sandblasting, brush polishing or the like.

In the present invention, one undercoat layer or two or more undercoat layers can be provided between the base material and the hydrophilic film.
The undercoat layer is preferably a layer formed by hydrolyzing and polycondensing a composition composed of at least an alkoxide compound containing an element selected from Si, Ti, Zr and Al and a nonvolatile catalyst.
The undercoat layer formed by hydrolyzing and polycondensing a composition composed of at least an alkoxide compound containing an element selected from Si , Tri, Zr and Al and a nonvolatile catalyst has a crosslinked structure and in the present invention, such a crosslinked structure formed by hydrolysis and condensation/polymerization of an alkoxide compound is conveniently referred to as a sol-gel crosslinked structure.

Examples of the alkoxide compound containing an element selected from Si, Ti, Zr and Al include those described above, and among these, an alkoxide containing Si is preferred in view of reactivity and easy availability. Specifically, a compound used for a silane coupling agent may be suitably used.

The nonvolatile catalyst for use in the undercoat layer is a catalyst except for those having a boiling point of less than 20°C. In other words, the nonvolatile catalyst includes, for example, those having a boiling point of 20°C or more and those originally having no boiling point (including those incapable of undergoing a phase change such as thermal decomposition) .
The nonvolatile catalyst for use in the present invention is not particularly limited, but examples thereof include a metal complex (sometimes referred to as a metal chelate compound) and a silane coupling agent. In this art, an acid or an alkali is suitably used as the catalyst, and such an acid or alkali may be applied without any particular limitation as long as it has a boiling point of 20°C or more. For example, hydrochloric acid having a boiling point of -83°C is excluded, but nitric acid having a boiling point of 121°C and phosphoric acid having a decomposition temperature of 213°C are applicable as the nonvolatile catalyst in the present invention.
Examples of the metal complex include those described above.

The silane coupling agent used as the nonvolatile catalyst is not particularly limited, but examples thereof include those having a functional group exhibiting acidity or alkalinity, more specifically, include a silane coupling agent having a functional group exhibiting acidity, such as peroxo acid, carboxylic acid, carbohydrazonic acid, carboximidic acid, sulfonic acid, sulfinic acid, sulfenic acid, selenonic acid, seleninic acid, selenenic acid, telluronic acid and the above-described alkali metal salts, and a silane coupling agent having a functional group exhibiting basicity, such as amino group.

The undercoat layer can be formed by coating a composition containing at least the above-described alkoxide compound and nonvolatile catalyst on a base material, and heating and drying the coating to effect hydrolysis and polycondensation of the composition. The heating temperature and heating time for the formation of the undercoat layer are not particularly limited as long as they are the temperature high enough and the time long enough to allow removal of the solvent in the sol solution and enable formation of a firm film, but in view of production suitability and the like, the heating temperature is preferably 150°C or less and the heating time is preferably within 1 hour.
The undercoat layer can be produced by a known coating method, and the coating method is not particularly limited but, for example, a spray coating method, a dip coating method, a flow coating method, a spin coating method, a roll coating method, a film applicator method, a screen printing method, a bar coater method, brush coating and sponge coating are applicable.

The thus-obtained undercoat layer contains the nonvolatile catalyst that is present without losing its activity, and in particular, thanks to the presence of the nonvolatile catalyst also on the surface, very high adherence is obtained at the interface between the undercoat layer and the hydrophilic film.

Also, the undercoat layer can be provided with fine unevenness by applying plasma etching or mixing a metal particle so as to yield higher adherence at the interface between the undercoat layer and the hydrophilic film.

The material used for the undercoat layer may be a hydrophilic resin or a water-dispersible latex.
Examples of the hydrophilic resin include polyvinyl alcohol (PVA), a cellulosic resin [e.g., methyl cellulose (MC), hydroxyethyl cellulose (HEC), carboxymethyl cellulose (CMC)], chitins, chitosans, starch, an ether bond-containing resin [e.g., polyethylene oxide (PEO), polyethylene glycol (PEG), polyvinyl ether (PVE)], and a carbamoyl group-containing resin [e.g., polyacrylamide (PAAM), polyvinylpyrrolidone (PVP)]. Other examples include a carboxyl group-containing polyacrylate, a maleic acid resin, an alginate and gelatins.
Among these, at least one member selected from a polyvinyl alcohol-based resin, a cellulosic resin, an ether bond-containing resin, a carbamoyl group-containing resin, a carboxyl group-containing resin and gelatins is preferred, and a polyvinyl alcohol (PVA)-based resin and gelatins are more preferred.

Examples of the water-dispersible latex include an acryl-based latex, a polyester-based latex, an NBR resin, a polyurethane-based latex, a polyvinyl acetate-based latex, an SBR resin, and a polyamide-based latex. Among these, an acryl-based latex is preferred.
One of these hydrophilic resins or water-dispersible latexes may be used alone or two or more thereof may be used in combination, and a hydrophilic resin and a water-dispersible latex may also be used in combination.
Furthermore, a crosslinking agent capable of crosslinking the hydrophilic resin or water-dispersible latex may also be used.
As for the crosslinking agent applicable to the present invention, known crosslinking agents which form the crosslinking by heat may be used. Thermal crosslinking agents in general are described in Shinzo Yamashita and Tosuke Kaneko, Kakyozai Handbook (crosslinking Agent Handbook), Taiseisha (1981). The crosslinking agent for use in the present invention is not particularly limited as long as the number of functional groups contained is 2 or more and the hydrophilic resin or water-dispersible latex can be effectively crosslinked. Specific examples of the thermal crosslinking agent include a polycarboxylic acid such as polyacrylic acid; an amine compound such as polyethyleneimine; a polyepoxy compound such as ethylene or propylene glycol diglycidyl ether, tetraethylene glycol diglycidyl ether, nonaethylene glycol diglycidyl ether, polyethylene or polypropylene glycol glycidyl ether, neopentyl glycol diglycidyl ether, 1,6-hexanediol diglycidyl ether, trimethylolpropane triglycidyl ether, and sorbitol polyglycidyl ether; a polyaldehyde compound such as glyoxal and terephthalaldehyde; a polyisocyanate compound such as tolylene diisocyanate, hexamethylene diisocyanate, diphenylmethane isocyanate, xylylene diisocyanate, polymethylene polyphenyl isocyanate, cyclohexyl diisocyanate, cyclohexane phenylene diisocyanate, naphthalene-1,5-diisocyanate, isopropylbenzene-2,4-diisocyanate, and polypropylene glycol/tolylene diisocyanate addition reaction product; a block polyisocyanate compound; a silane coupling agent such as tetraalkoxysilane; a metal crosslinking agent such as acetylacetonate of aluminum, copper or iron (III); and a polymethylol compound such as trimethylolmelamine and pentaerythritol. Among these thermal crosslinking agents, a water-soluble crosslinking agent is preferred because a coating solution can be easily prepared and the reduction in the hydrophilicity of the produced hydrophilic film can be prevented.
The total amount of the hydrophilic resin and/or water-dispersible latex in the undercoat layer is preferably from 0.01 to 20 g/m², more preferably from 0.1 to 10 g/m².

### [Layer Configuration in Use of Hydrophilic Member]

The hydrophilic member of the present invention can be used by appropriately adding separate layers according to the purpose, mode and place in use. The configuration of layers added, if desired, is described below.

### 1) Adhesive Layer

In the case of using the hydrophilic member of the present invention by laminating it to another base material, an adhesive which is a pressure-sensitive adhesive is preferably used as an adhesive layer on the back surface of the base material. As for the adhesive, those generally used for a self-adhesive sheet, such as rubber-based adhesive, acryl-based adhesive, silicone-based adhesive, vinyl ether-based adhesive and styrene-based adhesive, may be used.
In the case where the optical transparency is required, an adhesive for optical usage is selected. In the case where a pattern such as coloring, translucence or matte texture is required, in addition to the texturing of the base material, a dye or an organic or inorganic fine particle may be added to the adhesive to bring out the effect.
In the case where a tackifier is required, one kind of resin, for example, a tackifying resin such as rosin-based resin, terpene-based resin, petroleum-based resin, styrene-based resin, and hydrogenation product thereof, may be used, or some of them may be used as a mixture.
The adhesive force of the adhesive for use in the present invention is an adhesive force generally called strong adhesion and is 200 g/25 mm or more, preferably 300 g/25 mm or more, more preferably 400 g/25 mm or more. The adhesive force as used herein is a value measured by a 180° peeling test according to JIS Z 0237.

### 2) Release Layer

In the case where the hydrophilic member of the present invention has the above-described adhesive layer, a release layer may be further added. In the release layer, a release agent is preferably incorporated so as to impart releasability. Examples of the release agent which can be generally used include a silicone-based release agent composed of polyorganosiloxane, a fluorine-based compound, a long chain alkyl-modified polyvinyl alcohol, and a long chain alkyl-modified polyethylene imine. Also, there may be used various release agents such as hot-melt release agent and monomer-type release agent capable of curing a releasing monomer by radical polymerization, cationic polymerization, polycondensation reaction or the like; a copolymer-based resin such as acryl-silicone-based copolymer resin, acryl-fluorine-based copolymer resin and urethane-silicone-fluorine-based copolymer resin; a resin blend of silicone-based resin and acryl-based resin; and a resin blend of fluorine-based resin and acryl-based resin. Furthermore, a hardcoat release layer may be formed by curing a curable composition containing either one atom of fluorine atom and/or silicon atom and an active energy ray-polymerizable group-containing compound.

### 3) Other Layers

A protective layer may be provided on the hydrophilic film. The protective layer has a function of preventing scratching on the hydrophilic surface during handling, transportation, storage or the like or preventing reduction in the hydrophilicity due to adhesion of a contaminant. As for the protective layer, a hydrophilic polymer layer used for the release layer or undercoat layer above can be used. The protective layer is stripped off after laminating the hydrophilic member to an appropriate base material.

### [Form of Hydrophilic Member]

The hydrophilic member having a hydrophilic film may be supplied in the form of a sheet, a roll or a ribbon or may be cut for the lamination to an appropriate base material and then supplied.

### [Surface Free Energy]

The hydrophilicity on the hydrophilic film surface is generally determined by measuring the contact angle for a waterdrop. However, the waterdrop contact angle on the surface having extremely high hydrophilicity as in the present invention sometimes becomes 10° or less, even 5° or less, and this imposes a limitation on the cross comparison of the hydrophilicity degree. On the other hand, measurement of surface free energy is known as a method for more particularly evaluating the hydrophilicity degree of a solid surface. Various methods have been proposed, but in the present invention, the surface free energy is measured, for example, by a Zisman plotting method. More specifically, this is a method utilizing a property that the surface tension of an aqueous solution of an inorganic electrolyte such as magnesium chloride becomes larger with an increase in the concentration, where the contact angle is measured in air under the room temperature condition by using the aqueous solution above, points of aqueous solutions in various concentrations are plotted by taking the surface tension of the aqueous solution on the abscissa and the contact angle in terms of cosθ on the ordinate to obtain a linear relationship, and the surface tension giving cosθ=1, that is, contact angle=0°, is defined as the surface free energy of the solid. The surface tension of water is 72 mN/m, and a larger surface free energy value indicates higher hydrophilicity.
A hydrophilic layer where the surface free energy as measured by the above-described method is from 70 to 95 mN/m, preferably from 72 to 93 mN/m, more preferably from 75 to 90 mN/m, is excellent in the hydrophilicity and exhibits good performance.

A general hydrophilic film absorbs water and swells. Such a film readily allows intrusion of a contaminant into the inside of the film and is liable to be contaminated (the hydrophilicity deteriorates). When the film is conversely made to hardly swell in water, a contaminant scarcely enters the inside of the film, and the film is not easily contaminated, but the formed hydrophilic film becomes a film with low hydrophilicity. The (A-1) hydrophilic polymer for use in the present invention has at least one hydrolyzable alkoxysilyl group on the polymer side chain and therefore, by controlling a crosslinking reaction of hydrolyzable alkoxysilyl groups with each other to allow more progress of the crosslinking reaction, a film (dense film) having high strength and being resistant to swelling in water and in turn, unlikely to be contaminated with a contaminant can be formed. Furthermore, the specific hydrophilic polymer itself has high hydrophilicity and therefore, can form a film with excellent hydrophilicity. The water swelling degree of the hydrophilic film according to the present invention is 1.5 times or less, preferably 1.4 times or less. If the water swelling degree exceeds 1.5 times, a contaminant readily enters the inside of the film, and the hydrophilicity deteriorates. The water swelling degree is determined by dipping the hydrophilic member in pure water for 10 minutes and measuring the film thickness after dipping in water by ellipsometry (VASE, manufactured by J. A. Woollam) and is expressed by the ratio to the thickness before dipping in water.

A general hydrophilic film absorbs water and reserves the water inside of the film and therefore, the refractive index difference between the hydrophilic film and water is small. Such a hydrophilic film (film with low denseness) readily allows intrusion of a contaminant into the inside of the film and is liable to be contaminated (the hydrophilicity deteriorates). When the denseness is conversely increased, a contaminant scarcely enters the inside of the film, and the film is not easily contaminated, but the formed hydrophilic film becomes a film with low hydrophilicity. The (A-1) specific hydrophilic polymer for use in the present invention has at least one hydrolyzable alkoxysilyl group on the polymer side chain and therefore, by controlling a crosslinking reaction of hydrolyzable alkoxysilyl groups with each other to form a dense film, the film can be made resistant to contamination with a contaminant. Furthermore, the specific hydrophilic polymer has high hydrophilicity and therefore, can form a film with excellent hydrophilicity. The refractive index difference between the hydrophilic film of the present invention and water is preferably 0.14 or more, more preferably 0.15 or more, still more preferably from 0.17 to 0.20.
The refractive index difference between the hydrophilic film and water is determined as a difference from the refractive index 1.33 of water after dipping the hydrophilic member in pure water for 10 minutes and directly measuring the refractive index of the hydrophilic film by ellipsometry (VASE, manufactured by J. A. Woollam).

Also, for the purpose of imparting heat resistance against heat generation in the heat exchanger, Tg of the hydrophilic film is preferably from 40 to 150°C. Also, the modulus of the hydrophilic film is preferably from 1 to 7 GPa.

In the case of applying (using or laminating) the hydrophilic member of the present invention to windowpane or the like, transparency is important from the standpoint of securing visibility. The hydrophilic member of the present invention has excellent transparency, and the transparency is not impaired even when the thickness is large, so that both transparency and durability can be satisfied. The thickness of the hydrophilic film of the present invention is preferably from 0.01 to 100 µm, more preferably from 0 . 05 to 50 µm, and most preferably from 0.1 to 20 µm. When the film thickness is 0.01 µm or more, sufficiently high hydrophilicity and durability are advantageously obtained, and when the film thickness is 100 µm or less, a problem in terms of film-forming property, such as cracking, does not arise and this is preferred.
The transparency is evaluated by measuring the light transmittance in the visible light region (400 to 800 nm) by a spectrophotometer. The light transmittance is preferably from 100 to 70%, more preferably from 95 to 75%, and most preferably from 95 to 80%. Within this range, the hydrophilic member provided with the hydrophilic film can be applied to various uses without hindering the visibility.

The hydrophilic member of the present invention can be formed by dispersing or dissolving requisite components described above in a solvent to prepare a coating solution, coating it on an appropriate backing material, and curing the coating by heat.

For example, the (A-1) specific hydrophilic polymer and the (B) metal complex catalyst are dissolved in a solvent, and the solution is thoroughly stirred, as a result, the hydrolyzable alkoxysilyl group moiety of the hydrophilic polymer component is hydrolyzed and furthermore, condensation/polymerization partially proceeds to produce a coating solution for forming a hydrophilic film. From this coating solution, a hydrophilic film having high hydrophilicity and high film strength is formed.

The coating solution for forming a hydrophilic film can be prepared by dissolving the (A-1) specific hydrophilic polymer and the (B) metal complex catalyst and stirring the solution. The reaction temperature is from room temperature to 80°C, and the reaction time, that is, the time for which stirring is continued, is preferably from 1 to 72 hours. This stirring allows the hydrolysis and condensation/polymerization to proceed, whereby a coating solution for forming a hydrophilic film can be obtained.

The hydrophilic member of the present invention can be obtained by coating the hydrophilic composition on an appropriate base material, and heating/drying the coating to form a surface hydrophilic film. As for the heating/drying conditions to form a hydrophilic film, high-temperature heating is usually applied so as to more proceed the crosslinking reaction of the hydrolyzable alkoxysilyl group and in this case, the crosslinking reaction rapidly proceeds but at a certain point, the molecular motion of the hydrolyzable alkoxysilyl group is suppressed and the crosslinking reaction stops. In the present invention, the heating treatment is applied at a low temperature for a long time, whereby the crosslinking reaction effectively proceeds without suppressing the molecular motion of the hydrolyzable alkoxysilyl group and a firm and dense film is advantageously obtained.
The heating temperature and the heating time are preferably from 50 to 180°C and from 2 minutes to 2 hours, more preferably from 80 to 160°C and from 5 minutes to 1.5 hours, still more preferably from 80 to 160°C and from 1 to 1.5 hours.

The hydrophilic member of the present invention can be produced by a known coating method, and the coating method is not particularly limited, but examples of the method which can be applied include a spray coating method, a dip coating method, a flow coating method, a spin coating method, a roll coating method, a film applicator method, a screen printing method, a bar coaster method, brush coating, and sponge coating.

The material to which the hydrophilic member of the present invention can be applied is, for example, in the case of expecting an antifogging effect, a transparent material such as transparent glass substrate, transparent plastic substrate, lens, prism and mirror.
As for the glass, any glass such as soda glass, lead glass and borosilicate glass may be used. Also, according to the purpose, float sheet glass, figured glass, frosted sheet glass, mesh glass, wired glass, tempered glass, laminated glass, double glass, vacuum glass, security glass, or highly insulating Low-E double glass can be used.
The usage to which the member having an antifogging effect can be applied includes a mirror such as vehicle rearview mirror, bathroom mirror, lavatory mirror, dental mirror and road mirror; a lens such as eyeglass lens, optical lens, photographic lens, endoscopic lens, illumination lens, semiconductor lens and copier lens; a prism; a windowpane for buildings or lookout towers; a glass for other building material; a windowpane for various vehicles such as automobile, railway vehicle, airplane, marine vessel, submarine, snow wagon, ropeway gondola and amusement park gondola; a windshield glass for various vehicles such as automobile, railway vehicle, airplane, marine vessel, submarine, snow wagon, snowmobile, motorcycle, ropeway gondola and amusement park gondola; a glass for protective goggles, sporting goggles, protective mask shields, sporting mask shields, helmet shields or frozen food display cases; a cover glass for measurement hardware; and a film for the lamination to the surface of these articles. A most preferred usage is a glass for automobiles or building materials.

In the case of expecting the hydrophilic member of the present invention to exert an antifouling effect, for example, metal, ceramic, wood, stone, cement, concrete, fiber, cloth, paper, and a combination or laminate thereof all may be suitably used as the base material therefor, other than glass and plastic.
The usage to which the member having an antifouling effect can be applied includes a building material, a building exterior material such as outer wall and roof, a building interior material, a window frame, a windowpane, a structural member, an exterior or coat for vehicles such as automobile, railway vehicle, airplane, marine vessel, bicycle and motorcycle, an exterior, dust cover or coat for machinery and articles, an exterior or coat for traffic signs, various display devices, advertising towers, road noise barriers, railroad noise barriers, bridges and guardrails, an interior or coat for tunnels, an insulator, a solar cell cover, a heat collector cover for solar water heaters, a plastic greenhouse, a cover for vehicle lights, housing equipment, a toilet, a bathtub, a washstand, a lighting instrument, a lighting instrument cover, a kitchen utensil, a dish, a dish washer, a dish drier, a sink, a cooking oven, a kitchen hood, a ventilation fan, and a film for the lamination to the surface of these articles.
Other examples include a signboard, a traffic sign, a sound insulating wall, a plastic greenhouse, an insulator, a vehicle cover, a tent material, a reflector plate, a rain shutter door, a screen door, a solar cell cover, a heat collector cover of solar water heaters and the like, a road lamp, a pavement, outdoor lighting, a stone/tile for artificial waterfalls/artificial fountains, a bridge, a glass house, an outer wall material, a sealer between walls or glasses, a guardrail, a veranda, a vending machine, an outdoor unit of air conditioners, an outdoor bench, various display devices, a shutter, a tollgate, a fare box, a gutter, a protective cover, dust cover or coat for vehicle lamps, a coat for machinery and articles, an exterior or coat for advertising towers, a structural member, housing equipment, a toilet, a bathtub, a washstand, a lighting instrument, a kitchen utensil, a dish, a dish drier, a sink, a cooking oven, a kitchen hood, a ventilation fan, a window rail, a window flame, a tunnel inner wall, lighting in tunnels, a window sash, a fin stock for heat exchangers, an indoor unit of air conditioners, a car air-conditioner, a package air conditioner, a pavement, a bathroom or lavatory mirror, a plastic greenhouse ceiling, a bathroom vanity, an automobile body, and a film or emblem capable of being laminated to these articles.
This member is also applicable to a roofing material, antenna, transmission line or the like in snow countries, and in this case, an excellent property in terms of preventing snow accretion is obtained.

Among these uses, the hydrophilic member of the present invention is preferably a fin stock, particularly a fin stock having an aluminum-made fin body. That is, the fin stock of the present invention is preferably a fin stock comprising a fin body (preferably an aluminum-made fin body) and a hydrophilic film provided on at least a part of the surface of the fin body, wherein the hydrophilic film is provided by coating the hydrophilic film-forming composition of the present invention.
In an aluminum-made fin stock (an aluminum-made fin body itself) used for a heat exchanger or the like of, for example, a room air conditioner or a car air conditioner, cohesive water produced during cooling grows into a waterdrop and stays between fins to form a water bridge, as a result, the cooling capacity is reduced. Similarly, attachment of a dust or the like between fins also impairs the cooling capacity. In order to solve these problems, a fin stock is obtained by coating the hydrophilic film-forming composition of the present invention on a fin body, whereby a fin stock excellent in the hydrophilicity, antifouling property and their sustainability can be obtained.

The aluminum used for a fin body of the fin stock includes an aluminum plate whose surface is degreased and, if desired, subjected to a chemical conversion treatment. In view of adhesion, corrosion resistance and the like of the hydrophilized coat, the surface of the aluminum-made fin body is preferably subjected to a chemical conversion treatment. The chemical conversion treatment includes, for example, a chromate treatment, and typical examples thereof include a treatment such as alkali salt-chromate method (B.V. method, M.B.V. method, E.W, method, Alrock method, Pylumin method), chromic acid method, chromate method and phosphoric acid-chromic acid method, and a non-water washing and coating-type treatment with a composition mainly composed of chromium chromate.

The thin plate of aluminum or the like used for the fin body of a fin stock for heat exchangers may be any of a pure aluminum plate such as, in terms of JIS, 1100, 1050, 1200 and 1N30, an Al-Cu alloy plate such as 2017 and 2014, an Al-Mn alloy plate such as 3003 and 3004, an Al-Mg alloy plate such as 5052 and 5083, an Al-Mg-Si alloy plate such as 6061, and the like. Also, the shape thereof may be either a sheet or a coil.

The fin stock according to the present invention is preferably used for a heat exchanger. The heat exchanger having the fin stock according to the present invention is excellent in the hydrophilicity, antifouling property and their sustainability and therefore, can prevent a waterdrop or dust from attaching between fins. Examples of the heat exchanger include a heat exchanger used in room coolers, indoor air conditioners, oil coolers for construction machinery, car radiators and capacitors.
Also, the heat exchanger using the fin stock according to the present invention is preferably used in an air conditioner. The fin stock according to the present invention is excellent in the hydrophilicity, antifouling properties and their sustainability, so that an air conditioner improved in the above-described problems such as reduction of cooling capacity can be provided. The air conditioner may be any of a room air conditioner, a package air conditioner, a car air conditioner and the like.
In addition, the heat exchanger and air conditioner of the present invention are not particularly limited, and known techniques (for example, JP-A-2002-106882 and JP-A-2002-156135) can be applied thereto.

### EXAMPLES

The present invention is described in detail below by referring to Examples, but the present invention is not limited thereto.

### [Example 1]

A float sheet glass (thickness: 2 mm) that is a most common transparent sheet glass was prepared, and the surface of the sheet glass was hydrophilized by a UV/O₃ treatment for 10 minutes. Thereafter, First Layer Coating Solution (1) having the composition shown below was spin-coated thereon and dried in an oven at 100°C for 10 minutes to form a first layer having a dry coverage oaf 1.0 g/m². After fully cooling at room temperature, Hydrophilic Composition (1) was bar-coated as a second layer on the first layer coated surface and dried in an oven at 150°C for 30 minutes to form a second layer having a dry coverage of 3.0 g/m² (film thickness: 3 µm). In this way, a hydrophilic member was obtained.

### <First Layer Coating Solution (1)>

| | |
|---|---|
| A 20 mass% aqueous solution of colloidal silica dispersion (Snowtex C, produced by Nissan Chemicals Industries, Ltd.) | 100 g |
| Sol-Gel Preparation Solution (1) shown below | 500 g |
| A 5 mass% aqueous solution of Anionic Surfactant 1 shown below | 30 g |
| Purified water | 450 g |

### <Sol-Gel Preparation Solution (1)>

8 Gram of tetramethoxysilane (produced by Tokyo Chemical Industry Co., Ltd.) was mixed in 200 g of ethyl alcohol, 10 g of acetylacetone, 10 g of tetraethyl orthotitanate and 100 g of purified water, and the mixture was stirred at room temperature for 2 hours to prepare a sol-gel preparation solution.

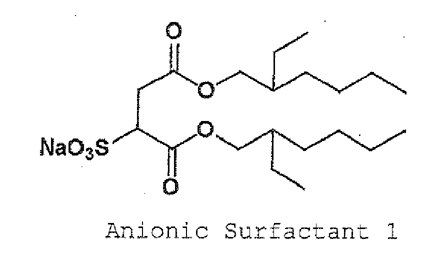

### <Hydrophilic Composition (1)>

| | |
|---|---|
| Sol-Gel Preparation Solution (2) shown below | 500 g |
| A 5 mass% aqueous solution of Anionic Surfactant 1 | 5.0 g |

### <Sol-Gel Preparation Solution (2)>

30 Gram of Hydrophilic Polymer <1> shown below was mixed in 200 g of ethyl alcohol, 0.25 g of acetylacetone, 0.3 g of tetraethyl orthotitanate and 300 g of purified water, and the mixture was stirred at room temperature for 2 hours to prepare a sol-gel preparation solution.

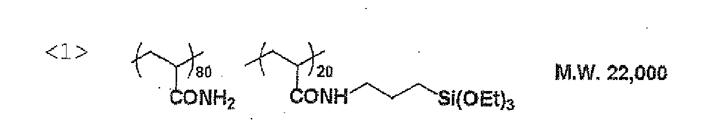

The synthesis method of Hydrophilic Polymer <1> used is described below. Other hydrophilic polymers containing a hydrolyzable alkoxysilyl group on the side chain can be synthesized in the same manner. Synthesis of Hydrophilic Polymer <1>:
Into a 500 ml-volume three-neck flask, 56.9 g of acrylamide, 55 g of acrylamide-3-(ethoxysilyl)propyl and 450 g of 1-methoxy-2-propanol were charged, and 2.3 g of dimethyl 2,2'-azobis(2-methylpropionate) was added thereto at 80°C in a nitrogen stream. The mixture was kept at the same temperature with stirring for 6 hours and then cooled to room temperature. The resulting reaction solution was poured in 2 liter of acetone, and the precipitated solid was collected by filtration. The obtained solid was washed with acetone to obtain Hydrophilic Polymer <1>. The mass after drying was 110 g. This polymer was a polymer having a mass average molecular weight of 22,000 as determined by GPC (polyethylene oxide standard).

### (Evaluation)

The hydrophilic member obtained was evaluated as follows. The evaluation results are shown in Table 6.
Visible Light Transmittance:
The light transmittance in the visible light region (from 400 to 800 nm) was measured by a spectrophotometer and evaluated.
Surface Free Energy:
The surface free energy was measured by the method described above.
Swelling Degree:
The hydrophilic member was dipped in pure water for 10 minutes, the film thickness before and after dipping was directly measured by ellipsometry (VASE, manufactured by J. A. Woollam), and the swelling degree due to dipping in water was calculated.
Antifouling Property:
A 50 ml-volume glass vessel was charged with 0.2 g of palmitic acid as a pseudo contaminant and covered with the hydrophilic member such that the hydrophilic film side was exposed to the palmitic acid, and after exposure at 105°C for 1 hour, the hydrophilic member was washed with running after for 30 minutes and then dried at 80°C for 30 minutes. This process was taken as 1 cycle, and the contact angle after 5 cycles was measured. As for the contact angle, the waterdrop contact angle of distilled water was measured by DROP MASTER 500 manufactured by Kyowa Interface Science Co., Ltd.
Scratch Test:
A sapphire needle of 0.1 mm in diameter was scanned on the hydrophilic member surface under a load increased from 5 g in steps of 5 g, and the load under which the surface was scratched (measured by a scratch strength tester, Type 18S, manufactured by Shinto Scientific Co., Ltd.) was evaluated. No scratching with a large load indicates good durability.
Water Resistance:
The hydrophilic member in a size of 120 cm² was rubbed by moving a sponge back and force 10 times in water while applying a load of 1 kg, and the residual film ratio was determined from the change in the weight between before and after the treatment.
Refractive Index Difference Between Hydrophilic Film and Water:
The hydrophilic member was dipped in pure water for 10 minutes, the refractive index of the hydrophilic film was directly measured by ellipsometry (VASE, manufactured by J. A. Woollam), and the difference form the refractive index 1.33 of water was determined.

### [Examples 2 to 5]

Hydrophilic members were produced and evaluated in the same manner as in Example 1 except that the drying after bar-coating Hydrophilic Composition (1) as a second layer was changed to the drying conditions shown in Table 1.

[Table 1]

**Table 1**

| | Drying Conditions of Second Layer |
|---|---|
| Example 2 | 150°C-15 minutes |
| Example 3 | 150°C-60 minutes |
| Example 4 | 100°C-30 minutes |
| Example 5 | 100°C-90 minutes |

### [Comparative Examples 1 and 2]

Hydrophilic members were produced and evaluated in the same manner as in Example 1 except that the drying after bar-coating Hydrophilic Composition (1) as a second layer was changed to the drying conditions shown in Table 2.

[Table 2]

**Table 2**

| | Drying Conditions of Second Layer |
|---|---|
| Comparative Example 1 | 150°C-1 minute |
| Comparative Example 2 | 220°C-30 minutes |

### [Example 6]

A hydrophilic member was produced and evaluated in the same manner as in Example 1 except that Hydrophilic Composition (1) was changed to Hydrophilic Composition (2).

### <Hydrophilic Composition (2)>

| | |
|---|---|
| Sol-Gel Preparation Solution (3) shown below | 500 g |
| A 5 mass% aqueous solution of Anionic Surfactant 1 | 5.0 g |

### <Sol-Gel Preparation Solution (3)>

27 Gram of Hydrophilic Polymer <2> shown below and 3 g of tetramethoxysilane were mixed in 200 g of ethyl alcohol, 0.25 g of acetylacetone, 0.3 g of tetraethyl orthotitanate and 300 g of purified water, and the mixture was stirred at room temperature for 2 hours to prepare a sol-gel preparation solution.

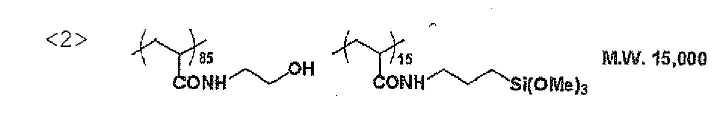

### [Examples 7 to 10]

Hydrophilic members were produced and evaluated in the same manner as in Example 6 except that the drying after bar-coating Hydrophilic Composition (2) as a second layer was changed to the drying conditions shown in Table 3.

**Table 3**

| | Drying Conditions of Second Layer |
|---|---|
| Example 7 | 150°C-15 minutes |
| Example 8 | 150°C-60 minutes |
| Example 9 | 100°C-30 minutes |
| Example 10 | 100°C-90 minutes |

### [Example 11]

An alkali-degreased aluminum substrate (thickness: 0.15 mm) was prepared, and First Layer Coating Solution (2) having the composition shown below was bar-coated thereon and dried in an oven at 100°C for 10 minutes to form a first layer having a dry coverage of 0.1 g/m². After fully cooling at room temperature, Hydrophilic Composition (1) used in Example 1 was bar-coated as a second layer on the first layer coated surface and dried in an oven at 150°C for 30 minutes to form a second layer having a dry coverage of 0.5 g/m². A hydrophilic member was obtained in this way and evaluated.

### <First Layer Coating Solution (2)>

| | |
|---|---|
| Sol-Gel Preparation Solution (4) shown below | 500 g |
| A 5 mass% aqueous solution of Anionic Surfactant 1 | 30 g |
| Purified water | 450 g |

### <Sol-Gel Preparation Solution (4)>

4 Gram of tetramethoxysilane (produced by Tokyo Chemical Industry Co., Ltd.) and 4 g of methyltrimethoxysilane (produced by Tokyo Chemical Industry Co., Ltd.) were mixed in 200 g of ethyl alcohol, 10 g of acetylacetone, 10 g of tetraethyl orthotitanate and 100 g of purified water, and the mixture was stirred at room temperature for 2 hours to prepare a sol-gel preparation solution.

### [Example 12]

A hydrophilic member was produced and evaluated in the same manner as in Example 11 except that Hydrophilic Composition (1) was changed to Hydrophilic Composition (3).

### <Hydrophilic Composition (3)>

| | |
|---|---|
| Sol-Gel Preparation Solution (5) shown below | 500 g |
| A 5 mass% aqueous solution of Anionic Surfactant 1 | 5.0 g |

### <Sol-Gel Preparation Solution (5)>

15 Gram of Hydrophilic Polymer <1> shown below as the (A-1) hydrophilic polymer having a hydrolyzable alkoxysilyl group on the polymer side chain (hydrophilic polymer side chain Si type) and 15 g of Hydrophilic Polymer <3> shown below as the (A-2) hydrophilic polymer having a hydrolyzable alkoxysilyl group at the polymer terminal (hydrophilic polymer terminal Si type) were mixed in 200 g of ethyl alcohol, 0.25 g of acetylacetone, 0.3 g of tetraethyl orthotitanate and 300 g of purified, water, and the mixture was stirred at room temperature for 2 hours to prepare a sol-gel preparation solution.

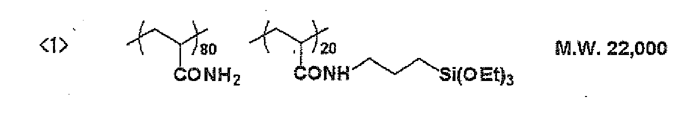

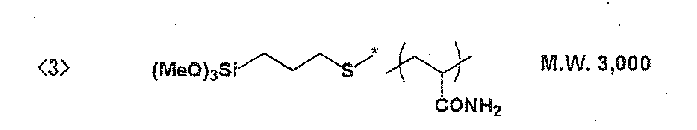

The synthesis method of Hydrophilic Polymer <3> used is described below. Other hydrophilic polymers containing a hydrolyzable alkoxysilyl group at the terminal can be synthesized in the same manner. Synthesis of Hydrophilic Polymer <3>:
Into a three-neck flask, 25 g of acrylamide, 3.5 g of 3-mercaptopropyltrimethoxysilane and 51.3 g of 1-methoxy-2-propanol were charged, and the mixture was heated to 65°C under nitrogen flow. Thereto, 0.25 g of 2,2'-azobis(2,4-dimethylvaleronitrile) was added, and the reaction was started. After stirring for 6 hours, the temperature was returned to room temperature, and the reaction solution was poured in 1.5 L of ethyl acetate, as a result, a solid was precipitated. The solid was collected by filtration, thoroughly washed with ethyl acetate, then dried (yield: 21 g) and further confirmed by GPC (polyethylene oxide standard) to be Hydrophilic Polymer <3> having a mass average molecular weight of 3,000. The viscosity of a 5% aqueous solution was 2.5 mPa·s, and the functional group density of the hydrophilic group was 13.4 meq/g.

### [Examples 13 to 15]

Hydrophilic members were produced and evaluated in the same manner as in Example 12 except that the drying after bar-coating Hydrophilic Composition (3) as a second layer was changed to the drying conditions shown in Table 4.

[Table 4]

**Table 4**

| | Drying Conditions of Second Layer |
|---|---|
| Example 13 | 150°C-15 minutes |
| Example 14 | 150°C-60 minutes |
| Example 15 | 150°C-90 minutes |

### [Examples 16 to 20]

First Layer Coating Solution (3) having the composition shown below was spin-coated (1,000 rpm, 30 seconds) on an SUS substrate (thickness: 1.1 mm) whose surface was hydrophilized by a UV/O₃ treatment for 10 minutes, and dried in an oven at 100°C for 2 minutes to form a layer having a dry coverage of 0.5 g/m². The waterdrop contact angle of the first layer was 80°. Furthermore, First Layer Coating Solution (4) having the composition shown below was spin-coated (1,000 rpm, 30 seconds) on the first layer and dried in an oven at 100°C for 10 minutes to form a layer having a dry coverage of 0.5 g/m², whereby a first layer having a two-layer structure was formed. The waterdrop contact angle of the layer formed from First Layer Coating Solution (4) was 10°. On the first layer having a two-layer structure, Hydrophilic Composition (3) was coated in the same manner as in Example 12 except for changing the hydrophilic polymer in the composition and the drying conditions as shown in Table 5. Hydrophilic members were obtained in this way and evaluated.

### <First Layer Coating Solution (3)>

| | |
|---|---|
| Epikote 1009 (produced by Shell Chemicals Japan Ltd.) | 100 g |
| Takenate D110N (produced by Takeda Chemical Industries, Ltd., solid content: 10%) | 100 g |
| Methyl ethyl ketone | 1,200 g |

### <First Layer Coating Solution (4)>

| | |
|---|---|
| An aqueous PVA 105 solution (produced by Kuraray Co., Ltd., solid content: 6%) | 130 g |
| An aqueous glyoxal solution (produced by Tokyo Chemical Industry Co., Ltd., solid content: 40%) | 50 g |
| Ethylene glycol diglycidyl ether (produced by Tokyo Chemical Industry Co., Ltd.) | 10 g |
| Ethanol silica (produced by Nissan Chemicals Industries, Ltd., solid content: 30%) | 30 g |
| A 5 mass% aqueous solution of Anionic Surfactant 1 | 20 g |
| Water | 7,600 g |

**Table 5**

| | Hydrophilic Polymer Side Chain Si Type | Hydrophilic polymer Terminal Si Type | Drying Conditions of Second Layer |
|---|---|---|---|
| Example 16 | Hydrophilic Polymer <4> | Hydrophilic Polymer <5> | 150°C-10 minutes |
| Example 17 | Hydrophilic Polymer <4> | Hydrophilic Polymer <5> | 150°C-20 minutes |
| Example 18 | Hydrophilic Polymer <4> | Hydrophilic Polymer <5> | 150°C-60 minutes |
| Example 19 | Hydrophilic Polymer <6> | Hydrophilic Polymer <7> | 100°C-30 minutes |
| Example 20 | Hydrophilic Polymer <6> | Hydrophilic Polymer <7> | 100°C-90 minutes |

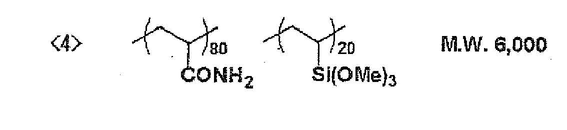

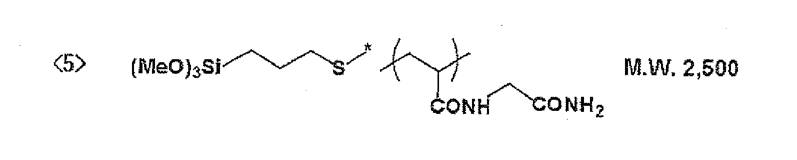

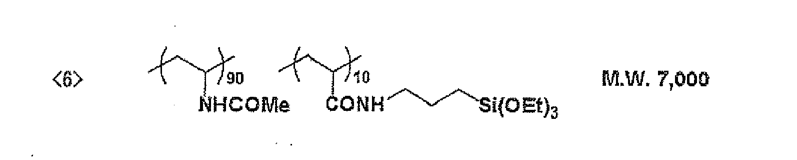

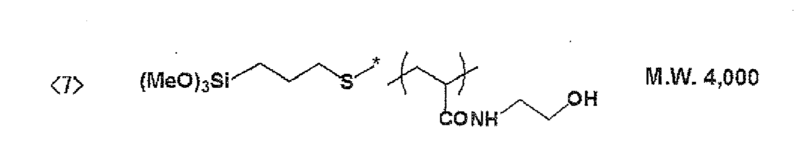

**Table 6**

| | Visible Light Transmittance | Surface Free Energy | Swelling Degree | Refractive Index Difference Between Hydrophilic Film and Water | Anti-fouling Property (contact angle) | Water Resistance Residual Film Ratio | Scratch Resitance |
|---|---|---|---|---|---|---|---|
| Example 1 | 87% | 82 mN/m | 1.2 times | 0.17 | 30° | 97% | 60 g |
| Example 2 | 87% % | 81 mN/m | 1.3 times | 0.16 | 32° | 95% | 55 g |
| Example 3 | 88% | 82 mN/m | 1.1 times | 0.18 | 28° | 98% | 65 g |
| Example 4 | 88% | 81 mN/m | 1.2 times | 0.17 | 30° | 97% | 60 g |
| Example 5 | 87% | 82 mN/m | 1.1 times | 0.18 | 27° | 98% | 65 g |
| Example 6 | 88% | 82 mN/m | 1.1 times | 0.18 | 28° | 98% | 70 g |
| Example 7 | 88% | 81 mN/m | 1.2 times | 0.17 | 30° | 97% | 70 g |
| Example 8 | 87% | 83 mN/m | 1.0 times | 0.20 | 26° | 99% | 75 g |
| Example 9 | 86% | 82 mN/m | 1.1 times | 0.18 | 27° | 97% | 70 g |
| Example 10 | 88 % | 83 mN/m | 1.0 times | 0.20 | 26° | 99% | 75 g |
| Example 11 | - | 80 mN/m | 1.2 times | 0.17 | 30° | 97% | 60 g |
| Example 12 | - | 83 mN/m | 1.2 times | 0.17 | 25° | 97% | 60 g |
| Example 13 | - | 82 mN/m | 1.3 times | 0.16 | 28° | 96% | 60 g |
| Example 14 | - | 84 mN/m | 1.1 times | 0.18 | 22° | 96% | 65 g |
| Example 15 | - | 84 mN/m | 1.0 times | 0.20 | 20° | 97% | 65 g |
| Example 16 | - | 83 mN/m | 1.2 times | 0.17 | 24° | 97% | 65 g |
| Example 17 | - | 82 mN/m | 1.1 times | 0.18 | 22° | 96% | 70 |
| Example 18 | - | 83 mN/m | 1.0 times | 0.20 | 18° | 98% | 70 g |
| Example 19 | - | 83 mN/m | 1.1 times | 0. 18 | 22° | 97% | 65 g |
| Example 20 | - | 84 mN/m | 1.0 times | 0.20 | 19° | 98% | 70 g |
| Comparative Example 1 | 87% | 80 mN/m | 2.0 times | 0.09 | 75° | 90% | 40 g |
| Comparative Example 2 | 86% | 80mN/m | 1.9 times | 0.10 | 70° | 91% | 45 g |

### [Examples 21 to 23 and Comparative Examples 3 and 4]

Hydrophilic members were produced and evaluated in the same manner as in Example 12 except that the hydrophilic polymer in Hydrophilic Composition (3) and the drying conditions as shown in Table 7. The evaluation results are shown in Table 8.

[Table 7]

**Table 7**

| | Hydrophilic Polymer Side Chain Si Type | Hydrophilic polymer Terminal Si Type | Drying Conditions of Second Layer |
|---|---|---|---|
| Example 21 | Hydrophilic Polymer <9> | Hydrophilic Polymer <10> | 150°C-90 minutes |
| Example 22 | Hydrophilic Polymer <9> | Hydrophilic Polymer <10> | 150°C-15 minutes |
| Example 23 | Hydrophilic Polymer <9> | Hydrophilic Polymer <10> | 150°C-10 minutes |
| Comparative Example 3 | Hydrophilic Polymer <9> | Hydrophilic Polymer <10> | 100°C-5 minutes |
| Comparative Example 4 | Hydrophilic Polymer <9> | Hydrophilic Polymer <10> | 220°C-15 minutes |

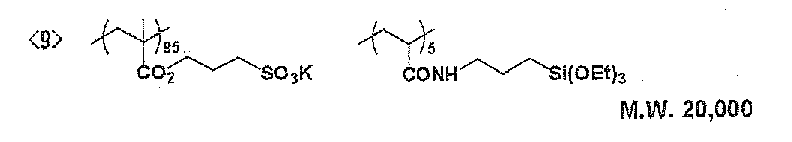

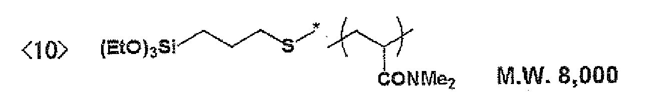

**Table 8**

| | Visible Light Transmittance | Surface Free Energy | Swelling Degree | Refractive Index Difference Between Hydrophilic Film and Water | Anti-fouling Property (contact angle) | Water Resistance, ResidualFilm Ratio | Scratch Resistance |
|---|---|---|---|---|---|---|---|
| Example 21 | - | 82 mN/m | 1.0 times | 0.20 | 18° | 98% | 70 g |
| Example 22 | - | 81 mN/m | 1.3 times | 0.16 | 28° | 97% | 65 g |
| Example 23 | - | 82 mN/m | 1.5 times | 0.14 | 35° | 96% | 65 g |
| Comparative Example 3 | - | 81 mN/m | 1.6 times | 0.12 | 55° | 93% | 55 g |
| Comparative Example 4 | - | 82 minim | 1.8 times | 0.10 | 65° | 92% | 50 g |

### [Examples 24 to 27]

Hydrophilic members were produced and evaluated in the same manner as in Example 12 except that (A-1) Hydrophilic Polymer <1> and (A-2) Hydrophilic Polymer <3> in Hydrophilic Composition (3) were changed to the mass ratio shown in Table 9. The results are shown in Table 10.

**Table 9**

| | Hydrophilic Polymer <1>/Hydrophilic Polymer <3> (mass ratio) |
|---|---|
| Example 24 | 60/40 |
| Example 25 | 70/30 |
| Example 26 | 80/20 |
| Example 27 | 95/5 |

**Table 10**

| | Visible Light Transmittance | Surface Free Energy | Swelling Degree | Refractive Index Difference Between Hydrophilic Film and Water | Anti-fouling Property (contact angle) | Water Resistance, Residual Film Ratio | Scratch Resistance |
|---|---|---|---|---|---|---|---|
| Example 24 | - | 83 mN/m | 1.2 times | 0.17 | 26° | 97% | 60 g |
| Example 25 | - | 83 mN/m | 1.1 times | 0.18 | 27° | 97% | 60 g |
| Example 26 | - | 82mN/m | 1.1 times | 0.18 | 28° | 98% | 65 g |
| Example 27 | - | 82 mN/m | 1.1 times | 0.18 | 29° | 98% | 65 g |

### [Examples 28 to 32]

Hydrophilic members were produced and evaluated in the same manner as in Example 12 except for changing the drying conditions of the second layer as shown in Table 11. The evaluation results are shown in Table 12.

**Table 11**

| | Drying Conditions of Second Layer |
|---|---|
| Example 28 | 50°C-90 minutes |
| Example 29 | 70°C-90 minutes |
| Example 30 | 100°C-90 minutes |
| Example 31 | 140°C-90 minutes |
| Example 32 | 180°C-90 minutes |

**Table 12**

| Example | Visible Light Transmittance | Surface Free Energy | Swelling Degree | Refractive Index Difference Between Hydrophilic Film and Water | Anti-fouling Property (contact angle) | Water Resistance, Residual Film Ratio | Scratch Resistance |
|---|---|---|---|---|---|---|---|
| Example 28 | - | 83 mN/m | 1.4 times | 0.15 | 34° | 970 % | 60 g |
| Example 29 | - | 83 mN/m | 1.3 times | 0.16 | 30° | 97% | 60 g |
| Example 30 | - | 83 mN/m | 1.2 times | 0.17 | 25° | 97% | 60 g |
| Example 31 | - | 83 mN/m | 1.2 times | 0.17 | 25° | 97% | 60 g |
| Example 32 | - | 82 mN/m | 1.4 times | 0.15 | 34° | 98% | 60 g |

### INDUSTRIAL APPLICABILITY

The hydrophilic member of the present invention can be used for various applications requiring hydrophilicity, water resistance, antifouling property and scratch resistance, such as fin stock for heat exchangers contained in air conditioners.
This application is based on Japanese Patent Application (Patent Application No. 2008-79318) filed on March 25, 2008 and Japanese Patent Application (Patent Application No. 2008-235452) filed on September 12, 2008, the contents of which are incorporated herein by way of reference.

## Claims

1. A hydrophilic member comprising a base material having thereon a hydrophilic film formed from a hydrophilic composition containing (A-1) a hydrophilic polymer having at least one hydrolyzable alkoxysilyl group on a polymer side chain and (B) a metal complex catalyst, wherein a water swelling degree of said hydrophilic film is 1.5 times or less.

2. The hydrophilic member as claimed in claim 1, wherein a difference between a refractive index of said hydrophilic film in water and a refractive index of water is 0.14 or more.

3. The hydrophilic member as claimed in claim 1 or 2, wherein a difference between a refractive index of said hydrophilic film in water and a refractive index of water is from 0.17 to 0.20.

4. The hydrophilic member as claimed in any one of claims 1 to 3, wherein said Hydrophilic composition further contains (A-2) a hydrophilic polymer having at least one hydrolyzable alkoxysilyl group at a polymer terminal.

5. The hydrophilic member as claimed in claim 4, wherein a mass ratio between said (A-2) hydrophilic polymer containing a hydrolyzable alkoxysilyl group at a polymer terminal and said (A-1) hydrophilic polymer containing a hydrolyzable alkoxysilyl group on a polymer side chain in said hydrophilic composition, {(A-2) hydrophilic polymer containing a hydrolyzable alkoxysilyl group at a polymer terminal/(A-1) hydrophilic polymer containing a hydrolyzable alkoxysilyl group on a polymer side chain}, is from 50/50 to 5/95.

6. The hydrophilic member as claimed in any one of claims 1 to 5, wherein said (A-1) hydrophilic polymer having at least one hydrolyzable alkoxysilyl group on a polymer side chain comprises a structure represented by the following formula (1): 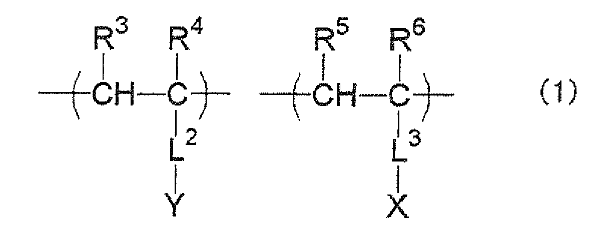 wherein each of R³, R⁴, R⁵ and R⁶ independently represents a hydrogen atom or a hydrocarbon group, X represents a hydrolyzable alkoxysilyl group, each of L² and L³ independently represents a single bond or a linking group, and Y represents -NHCOR⁷, -CONH₂, -N(R⁷)₂, -CON(R⁷)₂, -COR⁷, -OM, - CO₂M, -SO₃M, -PO₃M, -OPO₃M or -N(R⁷)₃Z¹, wherein R⁷ represents an alkyl group, an aryl group or an aralkyl group, M represents a hydrogen atom, an alkali metal, an alkaline earth metal or an onium, and Z¹ represents a halogen ion.

7. The hydrophilic member as claimed in any one of claims 4 to 6, wherein said (A-2) hydrophilic polymer having at least one hydrolyzable alkoxysilyl group at a polymer terminal comprises a structure represented by the following formula (2): 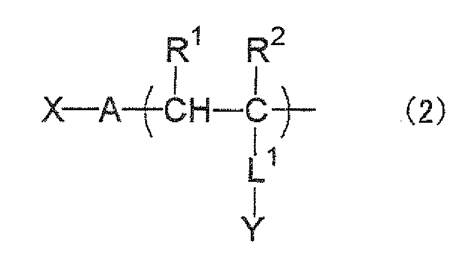 wherein each of R¹ and R² independently represents a hydrogen atom or a hydrocarbon group, X represents a hydrolyzable alkoxysilyl group, each of A and L¹ independently represents a single bond or a linking group, and Y represents -NHCOR⁷, - CONH₂, -N(R⁷)₂, -CON(R⁷)₂, -COR⁷, -OM, -CO₂M, -SO₃M, -PO₃M, - OPO₃M or -N(R⁷)₃Z¹, wherein R⁷ represents an alkyl group, an aryl group or an aralkyl group, M represents a hydrogen atom, an alkali metal, an alkaline earth metal or an onium, and Z¹ represents a halogen ion.

8. The hydrophilic member as claimed in any one of claims 1 to 7, wherein said hydrophilic film is formed by applying the hydrophilic composition onto a base material and subjecting the applied hydrophilic composition to a heat treatment at a temperature of 50 to 180°C for 1 hour or more.

9. A fin stock having the hydrophilic member claimed in any one of claims 1 to 8.

10. An aluminum-made fin stock, wherein the fin stock claimed in claim 9 is made of aluminum.

11. A heat exchanger having the aluminum-made fin stock claimed in claim 10.

12. An air conditioner having the heat exchanger claimed in claim 11.
